# EUROPEAN PATENT APPLICATION

(11) **EP 4 749 497 A1**
(43) Date of publication of application: **27.05.2026**
(21) Application number: 24847660.8
(22) Date of filing: 18.04.2024
(51) Int. Cl.: G06F 21/60

(54) **PERMISSION VERIFICATION METHOD AND APPARATUS, DEVICE AND CLUSTER**

(30) Priority: 01.08.2023 CN 202310960669; 28.11.2023 CN 202311609991
(71) Applicant: Huawei Cloud Computing Technologies Co., Ltd., Guiyang, Guizhou, 550025 (CN)
(72) Inventor: LU, Zhiting, Guiyang, Guizhou 550025 (CN); FANG, Xin, Guiyang, Guizhou 550025 (CN)
(74) Representative: Maiwald GmbH
(86) International application number: PCT/CN2024/088681
(87) International publication number: WO 2025/025694

(57) **Abstract**

A permission check method, an apparatus, a device, and a cluster are disclosed, and the disclosure relates to the field of storage technologies. The method is applied to an object storage service node. A target object stored in the node is mapped to a target node in a directory tree, and both an identifier of the target object and an identifier of the target node are a target identifier. After the node receives an operation request, because the operation request includes the target identifier, the node determines an operation permission of the operation request based on a file ACL of the target identifier and a file user identifier associated with the operation request, and determines a permission check result based on the operation permission of the operation request and a target operation type included in the operation request. Because the file ACL includes the file user identifier and a file permission, the node can provide, based on the file ACL, a fine-grained permission check that conforms to file semantics for the operation request of the target node indicated by the target identifier. This helps improve accuracy of the permission check for the operation request, to further improve security and reliability of a file service provided by the node.

## Description

This application claims priorities to Chinese Patent Application No. 202310960669.4, filed with the China National Intellectual Property Administration on August 1, 2023 and entitled "DATA STORAGE METHOD, APPARATUS, AND ANOTHER DEVICE", and to Application No. 202311609991.9, filed with the China National Intellectual Property Administration on November 28, 2023 and entitled "PERMISSION CHECK METHOD, APPARATUS, DEVICE, AND CLUSTER", both of which are incorporated herein by reference in their entireties.

### TECHNICAL FIELD

This application relates to the field of storage technologies, and specifically, to a permission check method, an apparatus, a device, and a cluster.

### BACKGROUND

Through file storage, data is stored in a file storage service node in a form of a file, and a user may access, through a file interface provided by the file storage service node, the file stored in the file storage service node. Through object storage, data is stored in an object storage service node in a form of an object, and the user accesses, through an object interface provided by the object storage service node, the object stored in the object storage service node.

Currently, to be compatible with some applications (file applications for short) that can access data through only the file interface, the object storage service node provides an object storage-based file service. In other words, the file application can access, through the file interface provided by the object storage service node, the object stored in the object storage service node. On this basis, how to ensure security and reliability of the file service provided by the object storage service node becomes a technical problem that urgently needs to be resolved.

### SUMMARY

This application provides a permission check method, an apparatus, a device, and a cluster, so that an object storage service node can provide a permission check that conforms to file semantics, to improve security and reliability of a file service provided by the object storage service node.

According to a first aspect, a permission check method is provided. The method is applied to an object storage service node. A storage bucket of the object storage service node stores a target object. The object storage service node is configured to map the target object to a target node in a directory tree. The target node is a target file or a target directory, and both an identifier of the target node and an identifier of the target object are a target identifier. The method includes: The object storage service node receives an operation request. The operation request includes the target identifier and a target operation type. The object storage service node determines an operation permission of the operation request based on a file access control list (access control list, ACL) of the target identifier and a file user identifier associated with the operation request. The file ACL of the target identifier includes at least one file user identifier and a file permission of the at least one file user identifier. The object storage service node determines a permission check result based on the operation permission of the operation request and the target operation type. The permission check result is that a check succeeds or fails.

In this solution, after receiving the operation request of the target node or the target object indicated by the target identifier, the object storage service node determines, based on the file ACL of the target identifier and the file user identifier associated with the operation request, the operation permission corresponding to the operation request, and determines the permission check result based on a relationship between the target operation type and the operation permission corresponding to the operation request. Because the file ACL includes an element representing a file user like a file user identifier (for example, uid or gid) and an element representing a file permission like a file permission (for example, r, w, or x), an object storage server node cannot only provide, based on the file ACL, a fine-grained permission check that conforms to file semantics for the operation request of the target node indicated by the target identifier, to improve accuracy of the permission check for the operation request of the target node, and further improve security and reliability of a file service provided by the object storage service node. In addition, the permission check that conforms to file semantics can be provided for the operation request of the target object indicated by the target identifier, to improve diversity of check manners for the operation request of the target object, and further improves user experience.

In a possible implementation, that the object storage service node determines the operation permission of the operation request based on the file access control list ACL of the target identifier and the file user identifier associated with the operation request includes: The object storage service node determines, based on the file ACL of the target identifier, a file permission of the file user identifier associated with the operation request. The object storage service node determines the file permission of the file user identifier associated with the operation request as the operation permission of the operation request. In this implementation, the file permission of the file user identifier associated with the operation request is directly determined as the operation permission of the operation request. This helps improve efficiency of the permission check.

In another possible implementation, that the object storage service node determines the operation permission of the operation request based on the file access control list ACL of the target identifier and the file user identifier associated with the operation request includes: The object storage service node determines, based on the file ACL of the target identifier, a file permission of the file user identifier associated with the operation request. The object storage service node determines, based on an object ACL of the target identifier, an object permission of an object user identifier associated with the operation request. The object ACL of the target identifier includes at least one object user identifier and an object permission of the at least one object user identifier. The object storage service node determines a minimum permission in the file permission of the file user identifier associated with the operation request and the object permission of the object user identifier associated with the operation request as the operation permission of the operation request. In this implementation, the minimum permission in the file permission of the file user identifier associated with the operation request and the object permission of the object user identifier associated with the operation request is determined as the operation permission of the operation request. This helps improve reliability of the permission check.

In another possible implementation, the operation request includes a target file user identifier, and an object user identifier corresponding to the target file user identifier is the object user identifier associated with the operation request. That the object storage service node determines, based on the object ACL of the target identifier, the object permission of the object user identifier associated with the operation request includes: The object storage service node determines, based on a user mapping relationship, the object user identifier corresponding to the target file user identifier as a target object user identifier. The user mapping relationship includes a correspondence between the target object user identifier and the target file user identifier. The object storage service node determines an object permission of the target object user identifier based on the object ACL of the target identifier. The object permission of the target object user identifier is the object permission of the object user identifier associated with the operation request. In this implementation, when a user sends the operation request through a file interface provided by the object storage service node, the object storage service node may determine, based on the user mapping relationship and the object ACL, the object permission of the object user identifier associated with the operation request. This helps improve diversity of permission types related to the operation request.

In another possible implementation, the method further includes: When the user mapping relationship does not include the target file user identifier, the object storage service node sends first response information based on the operation request. The first response information indicates no permission. This helps the user learn of the permission check result.

In another possible implementation, the operation request includes a target object user identifier, and the target object user identifier is the object user identifier associated with the operation request. That the object storage service node determines, based on the object ACL of the target identifier, the object permission of the object user identifier associated with the operation request includes: The object storage service node determines an object permission of the target object user identifier based on the object ACL of the target identifier. The object permission of the target object user identifier is the object permission of the object user identifier associated with the operation request. In this implementation, when a user sends the operation request through an object interface provided by the object storage service node, the object storage service node may determine, based on the object ACL, the object permission of the object user identifier associated with the operation request. This helps improve diversity of permission types related to the operation request.

In another possible implementation, the operation request includes a target file user identifier, and the target file user identifier is the file user identifier associated with the operation request. That the object storage service node determines, based on the file ACL of the target identifier, the file permission of the file user identifier associated with the operation request includes: The object storage service node determines a file permission of the target file user identifier based on the file ACL of the target identifier. The file permission of the target file user identifier is the file permission of the file user identifier associated with the operation request. In this implementation, when a user sends the operation request through a file interface provided by the object storage service node, the object storage service node may determine, based on the file ACL, the file permission of the file user identifier associated with the operation request. This helps improve diversity of permission types related to the operation request.

In another possible implementation, the operation request includes a target object user identifier, and a file user identifier corresponding to the target object user identifier is the file user identifier associated with the operation request. That the object storage service node determines, based on the file ACL of the target identifier, the file permission of the file user identifier associated with the operation request includes: The object storage service node determines, based on a user mapping relationship, the file user identifier corresponding to the target object user identifier as a target file user identifier. The user mapping relationship includes a correspondence between the target file user identifier and the target object user identifier. The object storage service node determines a file permission of the target file user identifier based on the file ACL of the target identifier. The file permission of the target file user identifier is the file permission of the file user identifier associated with the operation request. In this implementation, when a user sends the operation request through an object interface provided by the object storage service node, the object storage service node may determine, based on the user mapping relationship and the object ACL, the file permission of the file user identifier managed by the operation request. This helps improve diversity of permission types related to the operation request.

In another possible implementation, the method further includes: When the user mapping relationship does not include the target object user identifier, the object storage service node sends second response information based on the operation request. The second response information indicates no permission. This helps the user learn of the permission check result.

In another possible implementation, that the object storage service node determines a permission check result based on the operation permission corresponding to the operation request and the target operation type includes: if the operation permission corresponding to the operation request includes the target operation type, determining that the permission check result is that the check succeeds; or if the operation permission corresponding to the operation request does not include the target operation type, determining that the permission check result is that the check fails.

In another possible implementation, the method further includes: If the permission check result is that the check succeeds, the object storage service node processes the operation request. This helps ensure security of an object stored by the object storage service node.

In another possible implementation, the method further includes: If the permission check result is that the check succeeds, the object storage service node returns the permission check result based on the operation request. In this way, when the permission check succeeds, the user can learn of a permission check status in a timely manner.

In another possible implementation, the method further includes: If the permission check result is that the check fails, the object storage service node returns the permission check result based on the operation request. In this way, when the permission check fails, the user can learn of a permission check status in a timely manner, to change an access policy of the target node or the target object indicated by the target identifier.

In another possible implementation, when the target node is the target file, the target operation type includes a read operation, a write operation, or a delete operation; or when the target node is the target directory, the target operation includes a read operation, a create operation, a delete operation, a move operation, or a rename operation.

It should be noted that the object storage service node in the first aspect may be further configured to perform any method provided in the following second aspect.

According to a second aspect, a permission setting method is provided. The method is applied to an object storage service node. A storage bucket of the object storage service node stores a target object. The object storage service node is configured to map the target object to a target node in a directory tree. The target node is a target file or a target directory, and both an identifier of the target object and an identifier of the target node are a target identifier. The method includes: The object storage service node receives a file permission setting request. The file permission setting request includes the target identifier and a file ACL of the target identifier. The file ACL includes at least one file user identifier and a file permission of the at least one file user identifier. The object storage service node stores the file ACL of the target identifier in the object storage service node based on the target identifier. The file ACL of the target identifier is used to determine a file permission of a file user identifier associated with an operation request.

In this solution, the object storage service node provides a file permission setting function. After receiving the file permission setting request, the object storage service node stores, in the object storage service node based on the target identifier in the permission setting request, the file ACL in the permission setting request, to configure the file ACL for the target object indicated by the target identifier. Because the file ACL includes the file user identifier (for example, uid or gid) and the file permission (for example, r, w, or x), an element representing a file user and an element representing a file permission are configured for the target object, so that an access control policy (access control policy, ACP) of the target object better conforms to file semantics, and the object storage server node can provide a fine-grained permission check that conforms to the file semantics.

In a possible implementation, the method further includes: The object storage service node receives a mapping configuration request. The mapping configuration request includes a user mapping relationship, and the user mapping relationship includes a correspondence between the at least one file user identifier and at least one object user identifier. The object storage service node stores the user mapping relationship. The user mapping relationship is used to determine a file user identifier corresponding to an object user identifier carried in the operation request, or the user mapping relationship is used to determine an object user identifier corresponding to a file user identifier carried in the operation request.

In this implementation, when a user sends the operation request through an object interface provided by the object storage service node, the operation request carries the object user identifier. By storing the user mapping relationship, the object storage service node can determine, based on the user mapping relationship, the file user identifier corresponding to the object user identifier carried in the operation request. In this way, when accessing an object through the object interface, the user performs, based on the file user identifier corresponding to the object user identifier and the file ACL, a permission check that conforms to the file semantics.

In another possible implementation, the object storage service node receives a file permission update request. The file permission update request includes the target identifier, an update file ACL, and a setting type of the update file ACL. The setting type includes at least one of an add type, an override type, a modify type, and a delete type. The object storage service node updates the file ACL of the target identifier based on the target identifier, the update file ACL, and the setting type of the update file ACL.

In this implementation, the object storage service node provides a file ACL update function. In this way, after the file ACL is set for the first time, the file ACL may be modified by updating the file ACL. This helps improve convenience of file permission setting.

In another possible implementation, the file ACL includes one or more access control entries (access control entries, ACEs). The updating the file ACL of the target identifier includes: updating the one or more ACEs of the file ACL. One ACE includes one file user identifier and a file permission of the file user identifier. In this implementation, the object storage service node supports updating the one or more ACEs of the file ACL. This helps improve update accuracy.

In another possible implementation, the file permission setting request includes a setting type of the file ACL, and the setting type of the file ACL includes the add type. This helps ensure format consistency between the file permission update request and the file permission setting request, to further help reduce operation difficulty of the user.

In another possible implementation, that the object storage service node receives the file permission setting request includes: The object storage service node receives the file permission setting request through an object ACL setting interface. The object ACL setting interface is configured to set an object ACL of the target object. In this implementation, the file ACL is received through the object ACL setting interface provided by the object storage service node. This not only helps reduce permission setting costs, but also helps improve user experience.

In another possible implementation, the object storage service node stores an access control policy of the target object. The access control policy of the target object includes an object ACL of the target object, and the object ACL of the target object includes at least one object user identifier and an object permission of the at least one object user identifier. That the object storage service node stores the file ACL of the target identifier in the object storage service node based on the target identifier includes: The object storage service node writes the file ACL of the target identifier into the access control policy of the target object based on the target identifier.

In this implementation, the file ACL is written into the access control policy of the target object. In this way, when receiving the operation request, the object storage service node may determine, by reading a file (namely, an access control policy), an object permission and a file permission that are related to the operation request. This helps improve efficiency.

In another possible implementation, the method further includes: The object storage service node receives a file permission management request. The file permission management request includes the target identifier. The file permission management request is used to request to manage the file ACL of the target identifier. The object storage service node manages the file ACL of the target identifier based on the file permission management request and the target identifier, and returns third response information based on the file permission management request. The third response information indicates a management result of the file ACL.

In this implementation, the object storage service node provides a function of managing the file ACL for the user, to manage the file ACL stored in the object storage service node.

In another possible implementation, the file permission management request includes a file permission query request. The method further includes: The object storage service node receives the file permission query request. The file permission query request includes the target identifier. The object storage service node returns the file ACL of the target identifier in response to the file permission query request. In this implementation, the object storage service node provides a function of querying the file ACL for the user, to query the file ACL stored in the object storage service node.

In another possible implementation, the method further includes: The object storage service node receives a file permission delete request. The file permission delete request includes the target identifier. The object storage service node deletes the file ACL of the target identifier in response to the file permission delete request. In this implementation, the object storage service node provides a function of deleting the file ACL for the user, to delete the file ACL stored in the object storage service node.

It should be noted that the object storage service node in the second aspect may be further configured to perform any method provided in the foregoing first aspect.

According to a third aspect, a permission setting method is provided, applied to an electronic device. The method includes: obtaining a file ACL of a target identifier, where the file ACL of the target identifier includes at least one file user identifier and a file permission of the at least one file user identifier; and sending a file permission setting request to an object storage service node, where the permission setting request includes the target identifier and the file ACL of the target identifier.

In this solution, based on a file permission setting function provided by the object storage service node, when a user wants to set a file permission (namely, a permission that conforms to file semantics) for a target node or a target object indicated by the target identifier, the user may obtain the file ACL of the target identifier via the electronic device, and send the file permission setting request to the object storage service node. The request includes the target identifier (that is, identifiers of the target node and the target object) and the file ACL of the target identifier, and is used to request to configure the file ACL for the target object stored in the object storage service node. Because the file ACL includes the file user identifier (for example, uid or gid) and the file permission (for example, r, w, or x), an element representing a file user and an element representing the file permission are configured for the target object, so that an ACP of the target object better conforms to the file semantics, and the object storage server node can provide a fine-grained permission check that conforms to the file semantics.

In a possible implementation, the obtaining the file ACL of the target identifier includes: displaying a first user interface (UI), where the first UI includes a first control, and the first control indicates a target object/target node; displaying a second UI in response to a trigger operation for the first control, where the second UI includes a second control, and the second control indicates the file ACL; and obtaining the file ACL of the target identifier based on the second control on the second UI. In this implementation, the file ACL is obtained via the second control on the second UI, so that an obtaining process is visualized, thereby helping improve operation convenience and user experience.

In another possible implementation, the method further includes: obtaining a user mapping relationship, where the user mapping relationship includes a correspondence between the at least one file user identifier and at least one object user identifier; and sending the user mapping relationship to the object storage service node.

In this implementation, when the user sends an operation request through an object interface, the operation request carries the object user identifier. Therefore, the user mapping relationship is provided for the object storage service node, the object storage service node can determine, based on the user mapping relationship, a file user identifier of the object user identifier carried in the operation request. In this way, when accessing an object through the object interface, the user performs, based on the file user identifier corresponding to the object user identifier and the file ACL, a permission check that conforms to the file semantics.

In another possible implementation, the obtaining the user mapping relationship includes: displaying a third UI, where the third UI includes a third control and a fourth control corresponding to the third control, the third control indicates the object user identifier, and the fourth control indicates the file user identifier; and obtaining the user mapping relationship based on the third control and the fourth control corresponding to the third control.

In this implementation, the user mapping relationship is obtained via the third control and the fourth control corresponding to the third control, so that an obtaining process is visualized, thereby helping improve operation convenience and user experience.

In another possible implementation, the sending the file permission setting request to the object storage service node includes: sending the file permission setting request to the object storage service node through an object ACL setting interface provided by the object storage service node, where the object ACL setting interface is an interface configured to set an object ACL of the target object.

In this implementation, the file ACL is sent to the object storage service node through the object ACL setting interface provided by the object storage service node. This not only helps reduce permission setting costs, but also helps improve user experience.

In another possible implementation, the file permission setting request includes a setting type of the file ACL, and the setting type of the file ACL includes an add type.

In another possible implementation, the method further includes: obtaining an update file ACL; and sending a file permission update request to the object storage service node, where the file permission update setting request includes the target identifier, the update file ACL, and a setting type of the update file ACL; and the setting type of the update file ACL includes at least one of an add type, a delete type, an override type, and a modify type.

In this implementation, the object storage service node provides a file ACL update (for example, add, delete, override, or modify) function for the user. This helps improve flexibility and convenience of setting the file ACL.

In another possible implementation, the method further includes: sending a file permission management request to the object storage service node, where the permission management request includes the target identifier, and the permission management request is used to request to manage the file ACL of the target identifier; and receiving third response information, where the third response information indicates a management result of the file ACL.

In this implementation, a function of managing the file ACL is provided for the user based on the object storage service node, so that the user can manage (for example, query or delete) the file ACL stored in the object storage service node.

In another possible implementation, the file permission management request includes a file permission query request. The method further includes: sending the file permission query request to the object storage service node, where the file permission query request includes the target identifier; and receiving the file ACL of the target identifier sent by the object storage service node.

In this implementation, a function of querying the file ACL is provided for the user based on the object storage service node, so that the user can query the file ACL stored in the object storage service node.

In another possible implementation, the file permission management request includes a file permission delete request. The method further includes: sending the file permission delete request to the object storage service node, where the file permission delete request includes the target identifier; and receiving fourth response information sent by the object storage service node, where the fourth response information indicates a deletion result of the file ACL of the target identifier.

In this implementation, a function of deleting the file ACL is provided for the user based on the object storage service node, so that the user can delete the file ACL stored in the object storage service node.

According to a fourth aspect, a permission check method is provided. The method is applied to an object storage system. The object storage system includes an object storage service node and an electronic device. A storage bucket of the object storage service node stores a target object. The object storage service node is configured to map the target object to a target node in a directory tree. The target node is a target file or a target directory, and both an identifier of the target node and an identifier of the target object are a target identifier. The method includes: The electronic device sends an operation request. The operation request includes the target identifier and a target operation type. The object storage service node receives the operation request. The object storage service node determines, based on a file ACL of the target identifier and a file user identifier associated with the operation request, an operation permission corresponding to the operation request. The file ACL of the target identifier includes at least one file user identifier and a file permission of the at least one file user identifier. The object storage service node determines a permission check result based on the operation permission corresponding to the operation request and the target operation type. The permission check result is that a check succeeds or fails.

In the fourth aspect, the object storage service node may be further configured to perform any possible implementation provided in the first aspect.

According to a fifth aspect, a permission setting method is provided. The method is applied to an object storage system. The object storage system includes an object storage service node and an electronic device. A storage bucket of the object storage service node stores a target object. The object storage service node is configured to map the target object to a target node in a directory tree. The target node is a target file or a target directory, and both an identifier of the target object and an identifier of the target node are a target identifier. The method includes: The electronic device obtains a file ACL of the target identifier. The file ACL includes at least one file user identifier and a file permission of the at least one file user identifier. The electronic device sends a file permission setting request to the object storage service node. The file permission setting request includes the target identifier and the file ACL of the target identifier. The object storage service node receives the file permission setting request. The object storage service node stores the file ACL of the target identifier in the object storage service node based on the target identifier. The file ACL of the target identifier is used to determine a file permission of a file user identifier associated with an operation request.

In the fifth aspect, the object storage service node may be further configured to perform any possible implementation provided in the second aspect, and the electronic device may be further configured to perform any possible implementation provided in the third aspect.

According to a sixth aspect, a permission check apparatus is provided. The apparatus includes a functional module configured to perform any method provided in the first aspect. An action performed by each functional module is implemented by hardware or by hardware executing corresponding software. For example, the permission check apparatus may include a receiving module and a permission module. The receiving module is configured to receive an operation request. The operation request includes a target identifier and a target operation type. The permission module is configured to determine, based on a file ACL of the target identifier and a file user identifier associated with the operation request, an operation permission corresponding to the operation request. The file ACL of the target identifier includes at least one file user identifier and a file permission of the at least one file user identifier. The permission module is further configured to determine a permission check result based on the operation permission corresponding to the operation request and the target operation type. The permission check result is that a check succeeds or fails.

According to a seventh aspect, a permission setting apparatus is provided. The apparatus includes a functional module configured to perform any method provided in the second aspect. An action performed by each functional module is implemented by hardware or by hardware executing corresponding software. For example, the permission setting apparatus may include a receiving module and a permission module. The receiving module is configured to receive a file permission setting request. The file permission setting request includes a target identifier and a file ACL of the target identifier, and the file ACL includes at least one file user identifier and a file permission of the at least one file user identifier. The permission module is configured to store the file ACL of the target identifier in an object storage service node based on the target identifier. The file ACL of the target identifier is used to determine a file permission of a file user identifier associated with an operation request.

According to an eighth aspect, a permission setting apparatus is provided. The apparatus includes a functional module configured to perform any method provided in the third aspect. An action performed by each functional module is implemented by hardware or by hardware executing corresponding software. For example, the permission setting apparatus may include an obtaining module and a sending module. The obtaining module is configured to obtain a file ACL of a target identifier. The file ACL includes at least one file user identifier and a file permission of the at least one file user identifier. The sending module is configured to send a file permission setting request to an object storage service node. The file permission setting request includes the target identifier and the file ACL of the target identifier.

According to a ninth aspect, an object storage system is provided. The object storage system includes an object storage service node and an electronic device. A storage bucket of the object storage service node stores a target object. The object storage service node is configured to map the target object to a target node in a directory tree. The target node is a target file or a target directory, and both an identifier of the target node and an identifier of the target object are a target identifier. The electronic device is configured to send an operation request. The operation request includes the target identifier and a target operation type. The object storage service node is configured to receive the operation request. The object storage service node is further configured to determine, based on a file ACL of the target identifier and a file user identifier associated with the operation request, an operation permission corresponding to the operation request. The file ACL of the target identifier includes at least one file user identifier and a file permission of the at least one file user identifier. The object storage service node is further configured to determine a permission check result based on the operation permission corresponding to the operation request and the target operation type. The permission check result is that a check succeeds or fails.

In the ninth aspect, the object storage service node may be further configured to perform any possible implementation provided in the first aspect.

According to a tenth aspect, an object storage system is provided. The object storage system includes an object storage service node and an electronic device. A storage bucket of the object storage service node stores a target object. The object storage service node is configured to map the target object to a target node in a directory tree. The target node is a target file or a target directory, and both an identifier of the target object and an identifier of the target node are a target identifier. The electronic device is configured to obtain a file ACL of the target identifier. The file ACL includes at least one file user identifier and a file permission of the at least one file user identifier. The electronic device is further configured to send a file permission setting request to the object storage service node. The file permission setting request includes the target identifier and the file ACL of the target identifier. The object storage service node is configured to receive the file permission setting request. The object storage service node is further configured to store the file ACL of the target identifier in the object storage service node based on the target identifier. The file ACL of the target identifier is used to determine a file permission of a file user identifier associated with an operation request.

In the tenth aspect, the object storage service node may be further configured to perform any possible implementation provided in the second aspect, and the electronic device may be further configured to perform any possible implementation provided in the third aspect.

According to an eleventh aspect, a processor is provided. The processor is configured to perform any method provided in the first aspect, or perform any method provided in the second aspect.

According to a twelfth aspect, a processor is provided. The processor is configured to perform any method provided in the third aspect.

According to a thirteenth aspect, a chip is provided, including a processor and a power supply circuit. The power supply circuit is configured to supply power to the chip. The processor is configured to perform any method provided in the first aspect, or perform any method provided in the second aspect.

According to a fourteenth aspect, a chip is provided, including a processor and a power supply circuit. The power supply circuit is configured to supply power to the chip. The processor is configured to perform any method provided in the third aspect.

According to a fifteenth aspect, a computing device is provided. The computing device includes a processor and a memory. The processor of the computing device is configured to execute instructions stored in the memory of the computing device, to cause the computing device to perform any method provided in the first aspect or perform any method provided in the second aspect.

According to a sixteenth aspect, an electronic device is provided. The electronic device includes a processor and a memory. The processor of the electronic device is configured to execute instructions stored in the memory of the electronic device, to cause the electronic device to perform any method provided in the third aspect.

According to a seventeenth aspect, a computer-readable storage medium is provided, including computer program instructions. When the computer program instructions are executed by a computing device, the computing device performs any method provided in the first aspect or performs any method provided in the second aspect.

According to an eighteenth aspect, a computer-readable storage medium is provided, including computer program instructions. When the computer program instructions are executed by an electronic device, the electronic device performs any method provided in the third aspect.

According to a nineteenth aspect, a computer program product including instructions is provided. When the instructions are run on a computing device, the computing device is caused to perform any method provided in the first aspect or perform any method provided in the second aspect.

According to a twentieth aspect, a computer program product including instructions is provided. When the instructions are run by an electronic device, the electronic device is caused to perform any method provided in the third aspect.

For technical effects brought by any design of the fourth aspect to the twentieth aspect, refer to the technical effects brought by different designs of the first aspect to the third aspect. Details are not described herein again.

### BRIEF DESCRIPTION OF DRAWINGS

FIG. 1A is a diagram of a system architecture according to an embodiment of this application;
FIG. 1B is a diagram of another system architecture according to an embodiment of this application;
FIG. 2 is a flowchart of a permission check method according to an embodiment of this application;
FIG. 3 is a flowchart of another permission check method according to an embodiment of this application;
FIG. 4 is a flowchart of a permission check method of a read request according to an embodiment of this application;
FIG. 5 is a flowchart of a permission check method of a write request according to an embodiment of this application;
FIG. 6 is a flowchart of a permission check method of a delete request according to an embodiment of this application;
FIG. 7 is a flowchart of a file permission setting method according to an embodiment of this application;
FIG. 8A is a diagram of obtaining a file ACL according to an embodiment of this application;
FIG. 8B is another diagram of obtaining a file ACL according to an embodiment of this application;
FIG. 9 is a flowchart of a file permission update method according to an embodiment of this application;
FIG. 10 is a flowchart of a file permission management method according to an embodiment of this application;
FIG. 11A is a diagram of querying a file permission according to an embodiment of this application;
FIG. 11B is a diagram of deleting a file permission according to an embodiment of this application;
FIG. 12 is a flowchart of a user mapping relationship setting method according to an embodiment of this application;
FIG. 13A is a diagram of obtaining a user mapping relationship according to an embodiment of this application;
FIG. 13B is another diagram of obtaining a user mapping relationship according to an embodiment of this application;
FIG. 14 is a diagram of a permission check apparatus according to an embodiment of this application;
FIG. 15 is a diagram of a permission setting apparatus according to an embodiment of this application;
FIG. 16 is a diagram of a permission setting apparatus according to an embodiment of this application;
FIG. 17 is a diagram of a computing device according to an embodiment of this application;
FIG. 18 is a diagram of a computing device cluster according to an embodiment of this application;
FIG. 19 is a diagram of connections of a computing device cluster according to an embodiment of this application; and
FIG. 20 is a diagram of an electronic device according to an embodiment of this application.

### DESCRIPTION OF EMBODIMENTS

The following describes technical solutions in embodiments of this application with reference to accompanying drawings in embodiments of this application.

In descriptions of embodiments of this application, "/" represents an "or" relationship between associated objects unless otherwise specified. For example, A/B may represent A or B. The term "and/or" in this application is merely an association relationship for describing the associated objects, and represents that three relationships may exist. For example, A and/or B may represent the following three cases: Only A exists, both A and B exist, and only B exists, where A and B each may be singular or plural.

In addition, in the descriptions of embodiments of this application, unless otherwise specified, "multiple" means two or more. "At least one of the following items (pieces)" or a similar expression thereof indicates any combination of these items, including a single item (piece) or any combination of multiple items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. Persons skilled in the art may understand that the terms such as "first" and "second" do not limit a quantity or an execution sequence, and the terms such as "first" and "second" do not indicate a definite difference.

In addition, in embodiments of this application, terms like "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner for ease of understanding.

The following describes related terms in embodiments of this application.

A file system (file system) is software that manages and stores file information in an operating system. The file system includes a basic file system and several file subsystems. A user may uninstall and install a file subsystem as required.

A target tree provided by the file system includes a root directory, a subdirectory, and a file in the subdirectory. The root directory or the subdirectory may include a file and a next-level subdirectory.

A file storage service (file storage service, FSS) is to store data in a file storage service node as a file. The file storage service node provides a multi-level tree directory storage method based on the file system. The file storage service node is configured to provide a user with an operation (namely, a file service) that conforms to file semantics, for example, operations such as reading a file, writing a file, creating a file, deleting a file, opening a file, closing a file, and renaming (rename) a file. The file storage service node provides a file interface, and the file interface may indicate the operation that conforms to the file semantics. For example, the file interface may be a portable operating system interface (portable operating system interface, POSIX), and a user may access data on the file storage service node through the POSIX interface.

It should be noted that when the user accesses the data through the file interface, the data may be referred to as a file.

An object storage service (object storage service, OBS) is to store data in an object storage node as an object. The object storage node provides a flat storage mode based on storage buckets and objects. All objects in a storage bucket are located at a same logical layer, eliminating a multi-layer tree directory structure of the file storage service node. An object storage system is configured to provide a user with an operation (namely, an object service) that conforms to object semantics, for example, uploading an object, downloading an object, listing each object in a storage bucket, copying an object, moving an object, renaming an object, deleting an object, deleting each object in the storage bucket, or deleting specified objects. The object storage node provides an object interface, and the object interface may indicate the operation that conforms to the object semantics. For example, the object interface may be a representational state transfer (representational state transfer, REST) application programming interface (application programming interface, API). The user may access data on the object storage service node through the REST API interface.

It should be noted that when the user accesses the data through the object interface, the data may be referred to as an object.

A storage bucket (Bucket) may also be referred to as a bucket for short, and is a container that is on an object storage node and that is configured to store an object. Each storage bucket has its own attributes, such as a storage class, an access permission, and a region.

An object (Object) is a basic unit of data storage on an object storage node. An object is a collection of data and related attribute information (which may also be referred to as metadata) of a file. The object includes a key (Key), metadata (Metadata), and data (data).

The key is a name of the object, and may also be referred to as an object name or an object title. Each object in a storage bucket has a unique key. The metadata is description information of the object. The metadata includes user metadata and system metadata. The user metadata is specified when a user uploads the object, and is object description information specified by the user. The system metadata is automatically generated by the object storage service node. The data is data content of the object, namely, data of the file, and may also be referred to as user data.

A file permission is a permission that conforms to file semantics. In a Linux system, the file permission is classified into a special permission, an ACL permission, and a common permission in descending order. The special permission refers to setuid, setgid, and sticky bits of a file, which are used to set a special permission of the file or a directory, and has a higher priority than the ACL permission and the common permission. The common permission refers to a basic permission of a file or a directory, including permissions of an owner, a group, and others to read, write, and execute the file or the directory. The ACL permission is a fine-grained permission that can be set for an individual user and a user group to access a file or a directory. The ACL permission is inherited from the common permission, and has a higher priority than the common permission. Therefore, the ACL permission can override the common permission.

The following describes an example of an application scenario of embodiments of this application.

With development of storage technologies, object storage is proposed in related technologies to more conveniently store unstructured data such as movies, office documents, and images. For the object storage, flat address space is used to store data. Such address space does not have hierarchical directories and files. Therefore, an object storage system can store a large amount of data.

Currently, to be compatible with a file application, an object storage service node provides an object storage-based file service. That is, the file service is constructed based on the object storage. However, because storage forms, access interfaces, and permission management manners of objects and files are different, file semantics are greatly different from object semantics.

For example, in the file semantics, elements such as "r, w, and x" are used to represent file permissions, where r is used to represent a read permission, w is used to represent a write permission, and x is used to represent an execute permission. In the object semantics, elements such as "READ, READ_ACP, WRITE_ACP, and FULL _CONTROL" are used to represent object permissions, where READ is used to represent a permission to read an object, READ_ACP is used to represent a permission to read an access control policy (access control policy, ACP), WRITE_ACP is used to represent a permission to write the ACP, and FULL_CONTROL is used to represent all control permissions: READ, READ_ACP, and WRITE _ACP. In addition, in the file semantics, "uid or gid" is used to represent a file user, where uid represents a single user, and gid represents a group user. In the object semantics, "ID" is used to represent an object user, where a single user or a group user is not distinguished in the object user.

On this basis, how to ensure security and reliability of the file service provided by the object storage service node becomes a technical problem that urgently needs to be resolved.

In view of this, an embodiment of this application provides a permission check method, applied to an object storage service node. After receiving an operation request of a target node or a target object indicated by a target identifier, the object storage service node determines, based on a file ACL of the target identifier and a file user identifier associated with the operation request, an operation permission corresponding to the operation request, and determines a permission check result based on a relationship between a target operation type and the operation permission corresponding to the operation request. Because the file ACL includes an element representing a file user like a file user identifier (for example, uid or gid) and an element representing a file permission like a file permission (for example, r, w, or x), an object storage server node cannot only provide, based on the file ACL, a fine-grained permission check that conforms to file semantics for the operation request of the target node indicated by the target identifier, to improve accuracy of the permission check for the operation request of the target node, and further improve security and reliability of a file service provided by the object storage service node. In addition, the permission check that conforms to the file semantics can be provided for the operation request of the target object indicated by the target identifier, to improve diversity of check manners for the operation request of the target object, and further improves user experience.

The following describes an example of a system architecture of embodiments of this application.

The permission check method and a permission setting method provided in embodiments of this application are applicable to an object storage system.

The object storage system includes an object storage service node (Server) and a client (Client). The client can communicate with the object storage service node.

The object storage service node may provide a storage service and a metadata service. The storage service is used to manage user data of an object. The metadata service is used to manage metadata of the object.

In embodiments of this application, the object storage service node includes one or more computing devices. The metadata service and the storage service may be provided by a same computing device, or may be provided by different computing devices. This is not limited in embodiments of this application.

For example, when the metadata service and the storage service are provided by different computing devices, a computing device configured to provide the storage service may be referred to as an object-based storage device (Object-based Storage Device, OSD), and a node configured to provide the metadata service may be referred to as a metadata service (metadata server, MDS) device.

Optionally, the computing device may be a network device or a terminal device. The network device may include a server and the like. The server may be a physical server, or may be two or more physical servers that share different responsibilities and collaborate with each other to implement various functions of the server. For example, the server may be a blade server, a high-density server, a rack server, a tower server, or the like. The terminal device may include an ultra-mobile personal computer (ultra-mobile personal computer, UMPC), a notebook computer, a netbook, a desktop computer, a stand-alone computer, and the like.

It should be noted that the foregoing is merely an example for description, and a specific device form of the computing device is not limited in embodiments of this application.

In embodiments of this application, the object storage service node further includes a storage device. The storage device may include one or more storage buckets, and the one or more storage buckets are configured to store objects.

For example, the storage device may include a mechanical hard disk (hard disk drive, HDD), a solid-state drive (solid state disk/drive, SSD), and the like. It should be noted that a form of the storage device is not limited in embodiments of this application, and the foregoing is merely an example for description. In addition, a quantity of storage devices is not limited in embodiments of this application either.

In embodiments of this application, the storage device may be disposed on the computing device, or may be disposed independently of the computing device. When the storage device and the computing device are disposed independently of each other, the storage device is communicatively connected to the computing device.

In embodiments of this application, the object storage service node further includes one or more gateway devices, the one or more gateway devices are connected to the one or more computing devices, and the one or more computing devices may communicate with an electronic device of a user via the one or more gateway devices.

In embodiments of this application, the client may be installed on the electronic device of the user, and the electronic device communicates with the object storage service node via the client. The user may log in to the client via the electronic device, and rent a cloud storage service from a provider via the client, for example, rent a storage bucket. Then, the user may store an object in the storage bucket via the client, and manage and access, via the client, an object stored in the storage bucket.

In embodiments of this application, the object storage service node is configured to provide an object service (for example, a metadata service or a storage service) and a file service. For example, the user may access, through an object interface provided by the object storage service node, data stored in the object storage service node. In addition, the user may access, through a file interface provided by the object storage service node, data stored in the object storage service node.

In embodiments of this application, the object storage service node stores the data via the storage bucket. That is, the object storage service node stores the data in the storage bucket as an object.

To facilitate managing, by the user, the data stored in the storage bucket, the object storage service node further provides a manner of simulating a folder: Simulate an object as a folder on an OBS management console by adding "/" to a name of the object, and display the folder. For example, an object name of an object 0 is abc.jpg. If the object 0 needs to be simulated as a file in a folder, an object identifier of the object 0 may be modified to test/abc.jpg. In this case, "test" is a simulated folder. When the user lists objects in a storage bucket through the object interface, obtained object identifiers are separated by "/". If a last "/" is followed by content, it indicates a file. To be specific, an object to which the object identifier belongs indicates the file. If there is no content following the last "/", it indicates a folder path. To be specific, an object to which the object identifier belongs indicates a simulated folder. For example, an object identifier of an object 1 is test/. In this case, the object 1 indicates a folder path.

It should be noted that, when an object is simulated as a folder, an object identifier includes a folder path and an object name. When an object is not simulated as a folder, an object identifier may be an object name.

In embodiments of this application, the object storage service node may map an object in a storage bucket to a node in a directory tree by using hierarchical namespace. The node may be a file or a directory, an object including user data may be mapped to a file, and a simulated folder (that is, an object including no user data) may be mapped to a directory.

It should be noted that the file may be a common file including user data, and the directory may be a block device file, a character device file, a link file, a pipe file, a socket file, a directory file, or the like that includes no user data. A type of the file or the directory is not limited in embodiments of this application.

On this basis, after the user enables a file service feature for the object storage service node on the client, the user may access a node in a directory tree via a file system client (which may also be referred to as a file client) or an object storage client (which may also be referred to as an object client).

For example, the file system client (for example, an obsfs client) is installed on the electronic device of the user. The user may log in to a management platform by using a file account name and a password on the file system client, and invoke, via the management platform, the file interface provided by the object storage service node to access a node mapped from the object storage service node.

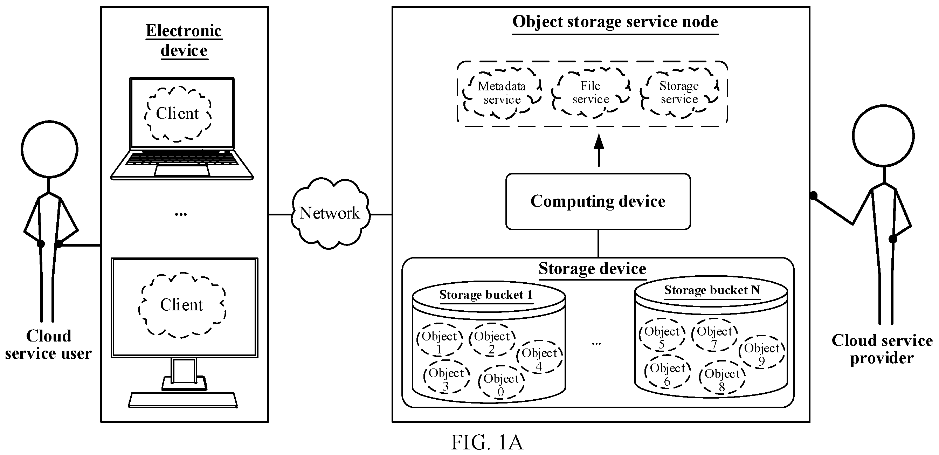

FIG. 1A is a diagram of a system architecture according to an embodiment of this application.

Refer to FIG. 1A. The system architecture includes an object storage service node, electronic devices, and clients. The client is installed on the electronic device. A cloud service provider provides a cloud service (for example, an object service, a metadata service, and a file service) for a user via the object storage service node. A cloud service tenant (namely, the user) rents, via the client on the electronic device, the cloud service provided by the cloud service provider.

For example, the electronic device may be a terminal device or a network device.

The terminal device may include a mobile phone, a tablet computer, a handheld computer, a PC, a cellular phone, a personal digital assistant (personal digital assistant, PDA), a wearable device (for example, a smartwatch or a smart band), a smart home device (for example, a television), a vehicle head unit (for example, a vehicle computer), a smart screen, a game console, a headset, an AI speaker, an augmented reality (augmented reality, AR)/virtual reality (virtual reality, VR) device, an ultra-mobile personal computer (ultra-mobile personal computer, UMPC), a notebook computer, a netbook, a desktop computer, or a stand-alone computer.

The network device may include a server and the like. The server may be a physical server, or may be two or more physical servers that share different responsibilities and collaborate with each other to implement various functions of the server. For example, the server may be a blade server, a high-density server, a rack server, a tower server, or the like.

It should be noted that the foregoing is merely an example for description, and a specific device form of the electronic device is not limited in embodiments of this application.

For example, a storage device of the object storage service node may include a storage bucket 1, ..., and a storage bucket N, where N is a positive integer greater than 1. After logging in to the client via the electronic device, the user may rent a storage bucket (for example, rent the storage bucket 1) from the cloud service provider. After the storage bucket 1 is rented, objects (for example, an object 0 to an object 4) that need to be stored may be sent to the object storage service node via the client. After receiving the object 0 to the object 4, the object storage service node stores the object 0 to the object 4 in the storage bucket 1 rented by the user.

It should be noted that a quantity of computing devices included in the object storage service node, a quantity of storage devices included in the object storage service node, and a quantity of storage buckets included in the storage device are not limited in this embodiment of this application. FIG. 1A is merely an example for description.

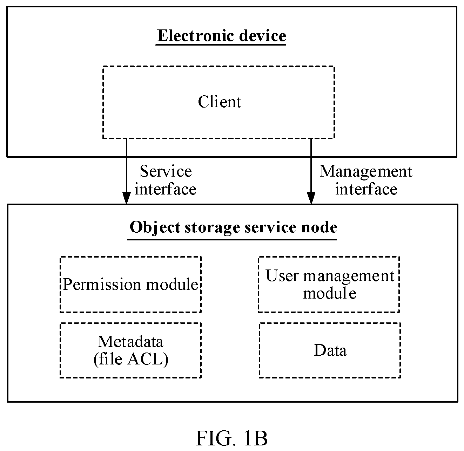

FIG. 1B is a diagram of another system architecture according to an embodiment of this application.

Refer to FIG. 1B. An object storage service node provides a service interface and a management interface. The service interface is configured to access data on the object storage service node, and the management interface is configured to manage the data on the object storage service node.

For example, a user may invoke the service interface via a client on an electronic device, to perform a read operation, a delete operation, or the like on the data on the object storage service node. In addition, the users may invoke the management interface via the client, to set permissions like a file ACL for an object stored in the object storage service node and set a user mapping relationship for the object or a storage bucket.

For example, the object storage service node includes a permission module (ACL Permission Check). By running the permission module, the object storage service node sets the file ACL for the object, and performs a permission check based on the file ACL when the user accesses the data on the object storage service node. In addition, the object storage service node may further include a user management module. The object storage service node sets the user mapping relationship for the object or the storage bucket by running the user management module.

It should be noted that the system architecture and the application scenario described in embodiments of this application are intended to describe the technical solutions in embodiments of this application more clearly, and do not constitute a limitation on the technical solutions provided in embodiments of this application. Persons of ordinary skill in the art may know that: With evolution of the system architecture and emergence of new application scenarios, the technical solutions provided in embodiments of this application are also applicable to similar technical problems.

For ease of understanding, the following describes, by using an example with reference to the foregoing system architecture and the accompanying drawings, the permission setting method provided in embodiments of this application.

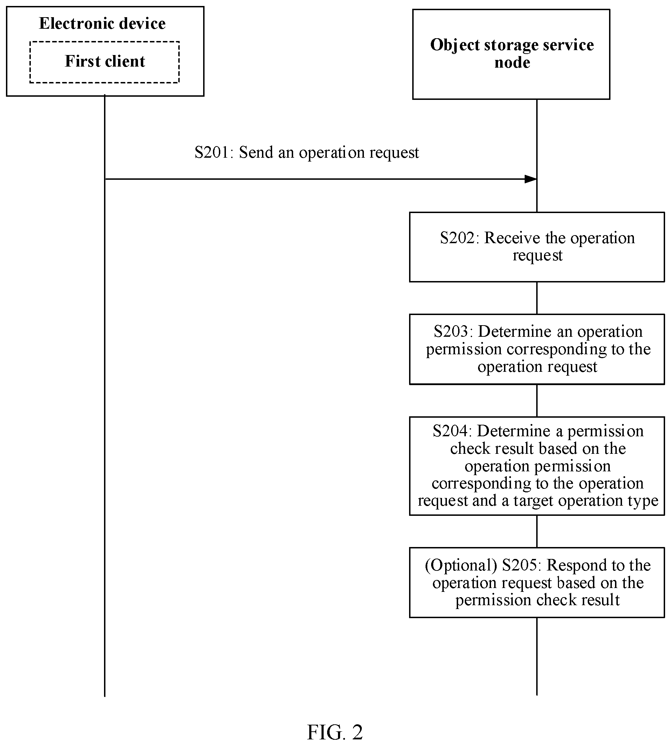

FIG. 2 is a flowchart of a permission check method according to an example embodiment. For example, the permission check method may include the following step 201 to step 205.

It should be noted that the "step" in embodiments of this application may be briefly referred to as "S", and details are not described subsequently.

In this embodiment of this application, an object storage service node stores multiple objects. For example, the multiple objects include a target object, and the target object may be any one of the multiple objects.

An object may indicate a file or a folder. When an object indicates a file, the object may include user data, metadata, and an object ID. When an object indicates a folder, the object may include metadata and an object ID.

The object storage service node maps multiple objects stored in a storage bucket to multiple nodes in a directory tree. For example, the multiple nodes include a target node, and the target node is a node to which the target object is mapped.

It should be noted that when a node is a file, the node may also be referred to as a file node. When a node is a directory, the node may also be referred to as a directory node.

It may be understood that an object indicating a file is mapped to a file node in the directory tree, and an object indicating a folder is mapped to a directory node in the directory tree.

In this embodiment of this application, the object storage service node stores mapping relationships between the multiple objects and the multiple nodes. The multiple objects are in one-to-one correspondence with the multiple nodes. That is, there is a mapping relationship between an object and a node to which the object is mapped. For example, there is a mapping relationship between the target node and the target object.

A target element stored in the object storage service node is used as an example below to describe a relationship between a node and an object.

For example, the object storage service node stores the target element in the storage bucket as an object, and the target element may be user data or a simulated folder. When a user accesses the target element through an object interface provided by the object storage service node, the target data may be referred to as the target object. When the user accesses the target element through a file interface provided by the object storage system, the target data is referred to as the target node. The target node and the target object that have the mapping relationship point to a same element (namely, the target element).

The target object and the target node to which the target object is mapped are used as an example below to describe the permission check method provided in this embodiment of this application. Both an identifier of the target object and an identifier of the target node are a target identifier.

For example, a representation form of the target identifier may be a uniform resource identifier (Uniform Resource Identifier, URI), a character string, or the like. This is not limited in this embodiment of this application.

Optionally, a first client is installed on an electronic device. When the first client sends an operation request to the object storage service node, a user identifier carried in the operation request is a file user identifier, for example, uid or gid.

It should be noted that related descriptions of the file user identifier are described in subsequent embodiments, and details are not described herein. In addition, to distinguish users using different clients to send operation requests to the object storage service node, a user using the first client may be referred to as a file user, and details are not described subsequently.

It should be noted that the first client may be a file system client, or may be another client that carries the file user identifier when communicating with the object storage service node. This is not limited in this embodiment of this application.

It should be noted that, in the following embodiment, that the first client performs an operation, for example, sending the operation request to the object storage service node, may be considered as that the electronic device performs the action in a process of running the first client, or the electronic device performs the operation via the first client. Details are not described subsequently.

Step 201: The first client sends the operation request to the object storage service node.

The operation request indicates the target identifier. When the operation request indicates the target identifier, the operation request may be used to request to perform an operation on the target node/target object indicated by the target identifier.

It should be noted that the following describes this embodiment of this application by using an example in which the operation request is used to request to perform the operation on the target node indicated by the target identifier.

In an example, the operation request may include the target identifier. In another example, the operation request may include a first character, and the object storage service node may determine, based on the first character, that an identifier of a node on which the operation request requests to perform the operation is the target identifier.

It should be noted that, how the operation request indicates the target identifier is not limited in this embodiment of this application, and the foregoing is merely an example for description.

The operation request indicates a target operation. When the operation request indicates the target operation, the operation request may be used to request to perform the target operation.

For example, the operation request may include a target operation type, and the target operation type is a type of the target operation. The object storage service node may determine, based on the target operation type, that the operation request requests to perform the target operation.

It should be noted that how the operation request indicates the type of the operation requested to be performed is not limited in this embodiment of this application, and the foregoing is merely an example for description.

In an example, the user logs in to the first client via the electronic device, and performs, via the first client, the target operation such as a read operation, a write operation, or a delete operation on a target node provided by a file system on the electronic device. The first client sends the operation request to the object storage service node in response to the target operation performed by the user on the target node.

In another example, when the electronic device needs to perform the target operation on the target node in a process of running a file application, the file application sends a request to the first client. The first client sends the operation request to the object storage service node in response to the received request.

For example, when the target node is a file, the target operation may include a read operation, a write operation, a delete operation, or the like. When the target node is a directory, the target operation may include a read operation, a create operation, a delete operation, a move operation, a rename operation, or the like.

In this embodiment of this application, the operation request may further include a target file user identifier. The target file user identifier is an identifier of a target file user who sends the operation request to the object storage service node via the first client. That is, the target file user is a file user requesting to perform the target operation on the target node.

For example, the user inputs a file account name and a password on a login UI of the first client displayed by the electronic device, and logs in to the first client. Then, when the first client sends the operation request to the object storage service node through a file interface (for example, a POSIX interface), the operation request carries a target file user identifier corresponding to the file account name. The electronic device may store a correspondence between the file account name and the target file user identifier.

Step 202: The object storage service node receives the operation request sent by the first client.

For example, the object storage service node may receive, through the file interface, the operation request sent by the first client.

For example, when the operation request is a write request, the file interface may be write/filesystem/dir/file, where write indicates that the target operation type is a write operation, and /filesystem/dir/file indicates the target identifier. When the operation request is a read request, the file interface may be read/filesystem/dir/file, where read indicates that the target operation type is a read operation. When the operation request is a delete request, the file interface may be delete/filesystem/dir/file, where delete indicates that the target operation type is a delete operation.

It should be noted that step 202 may be considered as an implementation of "receiving, by the object storage service node, the operation request."

Step 203: The object storage service node determines an operation permission corresponding to the operation request.

The operation permission corresponding to the operation request is a permission of the target file user for the target node, or a permission of the target file user, requesting to perform the target operation on the target node, for the target node.

It should be noted that the operation permission corresponding to the operation request may also be referred to as the operation permission of the operation request. This is not limited in this embodiment of this application.

Step 203 may be implemented in multiple manners. Manner 1 and Manner 2 are used as examples below for description.

Manner 1: The object storage service node determines, based on a file ACL corresponding to the target identifier and the target file user identifier included in the operation request, the operation permission corresponding to the operation request.

In this embodiment of this application, when the operation request includes the target file user identifier, the target file user identifier is a file user identifier associated with the operation request.

In this embodiment of this application, the file ACL is configured for the target object stored in the object storage service node. The file ACL of the target object may be stored in the object storage service node.

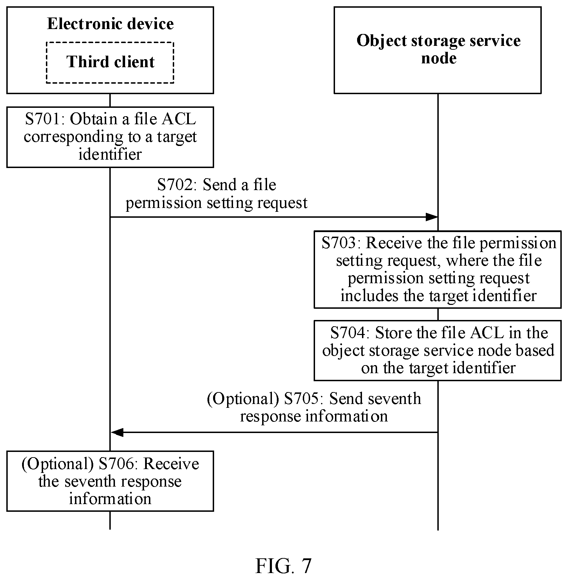

It should be noted that how to configure the file ACL for the target object is described in a subsequent embodiment, and details are not described herein. For details, refer to the embodiment shown in FIG. 7.

In addition, because the identifier of the target object is the target identifier, the file ACL of the target object may also be referred to as a file ACL corresponding to the target identifier, or referred to as a file ACL of the target identifier.

In this embodiment of this application, the file ACL is an ACL in which file semantics is used to represent a user and a permission. The file ACL includes at least one file user identifier and a file permission corresponding to the at least one file user identifier.

It should be noted that a quantity of file user identifiers included in the file ACL is not limited in this embodiment of this application. In addition, the file permission corresponding to the at least one file user identifier may also be referred to as a file permission of the at least one file user identifier.

The file user identifier is a user identifier in the file semantics, or a user identifier that conforms to the file semantics.

In this embodiment of this application, the file user identifier may include at least one of a user identifier (uid) and a group identifier (gid). The user identifier is used to represent a single user/single file user. The group identifier is used to represent a group, and the group may include one or more users/file users.

In this embodiment, the file ACL is set to include the file user identifier, for example, uid or gid, so that an element used to represent a file user is added to the file ACL of the target object. To be specific, the file semantics is used to represent a user, to extend a representation method of a user in the file ACL of the target object. In this way, the file ACL of the target object better conforms to the file semantics.

For example, the file user identifier may be an identifier of a user using the target node, or may be an identifier of a user creating the target node. The group identifier may be an identifier of a group using the target node, or may be an identifier of a group creating the target node. The user/group that creates the target node may also be referred to as an owner of the file.

Optionally, the file permission is a permission in the file semantics, or a permission conforming to the file semantics.

In this embodiment of this application, the file permission may include at least one of a read permission (r), a write permission (w), and an execute permission (x).

In this embodiment, the file ACL is set to include the file permission, for example, r, w, or x, so that an element used to represent a file permission is added to the file ACL of the target object. To be specific, the file semantics is used to represent a permission, to extend a representation method of a permission in the file ACL of the target object. In this way, the file ACL of the target object better conforms to the file semantics.

It should be noted that when the target node is a file, r is used to represent a permission to read content of the target node. w is used to represent a permission to edit, add, and delete content of the target node. x is used to represent a permission to be executed by an operating system.

When the target node is a directory, r is used to represent a permission to read a file name in the target node. w is used to represent a permission to create a file/subdirectory in the target node, delete a file/subdirectory from the target node, rename a file/subdirectory in the directory, and move a position of a file/subdirectory in the target node. x is used to represent a permission to enter the target node.

In this embodiment of this application, when the file user identifier belongs to a user 1, the file permission corresponding to the file user identifier is a permission of the user 1 for the target node/target object. That is, the file ACL of the target object may indicate a permission of a user to which the file user identifier belongs for the target node/target object.

In this embodiment of this application, the file ACL of the target object may be stored in an XML body. The following describes an example of a method for representing the file user identifier and the file permission in the XML body.

In an example, the file ACL of the target object includes <uid>6668</uid> and <Permission>w</Permission> corresponding to <uid>6668</uid>, where <uid>6668</uid> is used to represent that the user identifier is 6668, and <Permission>w</Permission> is used to represent that a file permission corresponding to 6668 is the write permission. That is, a user to which 6668 belongs has the write permission for the target node.

In another example, the file ACL of the target object includes <gid>6670</gid> and <Permission>rw</Permission> corresponding to <gid>6670</gid>, where <gid>6670</gid> is used to represent that the group identifier is 6670, and <Permission>rw</Permission> is used to represent that a file permission corresponding to 6670 is the read permission and the write permission. That is, each user in a group to which 6670 belongs has the read permission and the write permission for the target node.

In still another example, the file ACL of the target object includes <uid>other</uid>, <gid>other</gid>, and <Permission>r</Permission> corresponding to <uid>other</uid> and <gid>other</gid>, where <uid>other</uid> and <gid>other</gid> are used to represent that the user identifier and the group identifier are other, and <Permission>r</Permission> is used to represent that a file permission corresponding to other is the read permission. That is, a user to which other belongs has the read permission for the target node.

In still another example, the file ACL of the target object includes <Owner><uid>6667</uid><gid>6668</gid></Owner>, where <uid>6667</uid> is used to represent a user identifier of an owner of the target node, and <gid>6668</gid> indicates a group identifier of the owner of the target node.

For example, the owner of the target node has all permissions, that is, has the r, w, and x permissions. Based on this, <Owner><uid>6667</uid><gid>6668</gid></Owner> corresponds to <Permission>rwx</Permission>.

It should be noted that, because the owner of the target node has all the permissions, in the file ACL of the target object, a file permission corresponding to an identifier of the owner of the target node may be omitted, that is, a file permission corresponding to <Owner><uid>6667</uid><gid>6668</gid></Owner> may be omitted.

In this embodiment of this application, the determining, based on the file ACL corresponding to the target identifier and the file user identifier associated with the operation request, the permission corresponding to the operation request may include: determining, based on the file ACL of the target object, a file permission corresponding to the target file user identifier; and determining the file permission corresponding to the target file user identifier as the operation permission corresponding to the operation request.

The file permission corresponding to the target file user identifier is a file permission of the file user identifier associated with the operation request.

It should be noted that the file permission corresponding to the target file user identifier is the file permission of the target file user for the target node, or the file permission of the target file user, requesting to perform the target operation on the target node, for the target node. In addition, the file permission corresponding to the target file user identifier may also be referred to as a permission of the target file user identifier.

In this embodiment of this application, after receiving the operation request, the object storage service node reads the file ACL of the target object based on the target identifier being the identifier of the target object, and determines, based on the file ACL of the target object, the file permission corresponding to the target file user identifier, to perform a file permission check on the target operation requested by the target file user.

For example, the object storage service node views (check) each ACE in the file ACL of the target object, to determine the file permission corresponding to the target file user identifier, so as to determine the operation permission corresponding to the operation request.

For example, the target file user identifier is 6668, and the file ACL of the target object includes <uid>6668</uid> and <Permission>w</Permission> corresponding to <uid>6668</uid>. Based on this, the object storage service node determines that the file permission corresponding to the target file user identifier is w.

It should be noted that Manner 1 may be considered as a specific implementation of "determining the operation permission of the operation request based on the file ACL of the target identifier and the file user identifier associated with the operation request."

In this manner, the file permission corresponding to the target file user identifier is used as the operation permission corresponding to the operation request, so that only the file permission is used to determine a permission check result. This helps improve check efficiency.

Manner 2: The object storage service node determines, based on a file ACL corresponding to the target identifier, the target file user identifier included in the operation request, an object ACL corresponding to the target identifier, and an object user identifier associated with the operation request, the operation permission corresponding to the operation request.

In this embodiment of this application, when the operation request includes the target file user identifier, an object user identifier corresponding to the target file user identifier is the object user identifier associated with the operation request. How to determine the object user identifier corresponding to the target file user identifier is described in a subsequent embodiment, and details are not described herein. For details, refer to S203b.

In this embodiment of this application, the object ACL is configured for the target object stored in the object storage service node. The object ACL of the target object may be stored in the object storage service node.

It should be noted that, for how to configure the object ACL for the target object, refer to a solution in a related technology. This is not limited in this embodiment of this application.

In addition, because the identifier of the target object is the target identifier, the object ACL of the target object may also be referred to as an object ACL corresponding to the target identifier, or referred to as an object ACL of the target identifier.

In this embodiment of this application, the object ACL is an ACL in which object semantics is used to represent a user and a permission. The object ACL includes at least one object user identifier and an object permission corresponding to the at least one object user identifier.

It should be noted that a quantity of object user identifiers included in the object ACL is not limited in this embodiment of this application. In addition, the object permission corresponding to the at least one object user identifier may also be referred to as an object permission of the at least one object user identifier.

The object user identifier is a user identifier in the object semantics, or a user identifier that conforms to the object semantics. The object permission is a permission in the object semantics, or a permission that conforms to the object semantics.

In this embodiment of this application, the object user identifier may include an ID of an object user, for example, abc1, ..., or abc5.

Step 203a to step 203d are used as an example below to describe Manner 2.

Step 203a: Determine, based on a file ACL of the target object, a file permission corresponding to the target file user identifier.

It should be noted that, for related descriptions of step 203a, refer to the descriptions in Manner 1. Details are not described herein again.

Step 203b: Determine, based on a user mapping relationship, the object user identifier corresponding to the target file user identifier as a target object user identifier.

The object user identifier corresponding to the target file user identifier is the object user identifier associated with the operation request. That is, the target object user identifier is the object user identifier associated with the operation request.

In this embodiment of this application, the object storage service node stores the user mapping relationship, and the user mapping relationship includes a correspondence between the at least one object user identifier and the at least one file user identifier. After receiving the operation request, the object storage service node may determine, based on the user mapping relationship, the object user identifier corresponding to the target file user identifier in the operation request, to obtain the object user identifier associated with the operation request.

It should be noted that, in this embodiment of this application, time for determining the object user identifier corresponding to the target file user is not limited, and the foregoing is merely an example for description. For example, if reading an object user identifier when reading the object ACL of the target object, the object storage service node determines, based on the user mapping relationship, whether the read object user identifier is the object user identifier associated with the operation request, that is, whether the read object user identifier is the object user identifier that has the correspondence with the target file user identifier.

For example, the target file user identifier is 6668, and the user mapping relationship includes a correspondence between abc1 and 6668. Based on this, the object storage service node determines abc1 as the target object user identifier.

Optionally, the permission check method further includes: If the user mapping relationship does not include the target file user identifier, the object storage service node sends first response information. The first response information indicates no permission.

That the user mapping relationship does not include the target file user identifier may be considered as that the user mapping relationship does not include the object user identifier corresponding to the target file user identifier.

In this embodiment, when the user mapping relationship does not include the target file user identifier, the object storage service node sends the first response information to the first client, to notify the user that the user has no permission. This helps the user adjust an access policy in a timely manner.

Step 203c: Determine, based on the object ACL of the target object, an object permission corresponding to the target object user identifier.

In this embodiment of this application, after determining the object user identifier (namely, the target object user identifier) associated with the operation request, the object storage service node determines, based on the object ACL of the target object, the object permission corresponding to the target object user identifier.

For example, the target object user identifier is abc1, and the object ACL of the target object includes <ID>abc1</ID> and <Permission>READ</Permission> corresponding to <ID>abc1</ID>. Based on this, the object storage service node determines that an object permission corresponding to a target file object identifier is READ.

Step 203d: Determine a minimum permission in the file permission corresponding to the target file user identifier and the object permission corresponding to the target object user identifier as the operation permission corresponding to the operation request.

For example, with reference to Manner 1, it can be learned that the file permission corresponding to the target file user identifier is "w". If the object permission corresponding to the target object user identifier is "READ", because the read permission represented by "READ" is less than the write permission represented by "w", the operation permission corresponding to the operation request is "READ". That is, the target file user has only the read permission for the target node.

It should be noted that Manner 2 may be considered as another specific implementation of "determining the operation permission of the operation request based on the file ACL of the target identifier and the file user identifier associated with the operation request."

In this manner, the minimum permission in the file permission corresponding to the target file user identifier and the object permission corresponding to the target object is used as the operation permission corresponding to the operation request, to determine the permission check result based on the minimum permission in the file permission and the object permission, so as to provide a double permission check for the user. This helps improve a standard of the permission check, and further helps improve reliability and security of a file service provided by the object storage service node.

Step 204: The object storage service node determines the permission check result based on the operation permission corresponding to the operation request and the target operation type. The permission check result includes that a check succeeds or fails.

In the foregoing embodiment, the object storage service node provides the user with a file permission check service, namely, a permission check service that conforms to the file semantics. When the user sends the operation request to the object storage service node via the first client, after receiving the operation request, the object storage service node determines, based on the target identifier indicated by the operation request, the file ACL using the target object, and the target file user identifier included in the operation request, the operation permission corresponding to the operation request, and determines the permission check result based on a relationship between the target operation and the operation permission corresponding to the operation request.

Because the file ACL that conforms to the file semantics is used to perform a permission check on the target operation requested by the user, a fine-grained permission check that conforms to the file semantics is performed on the target operation requested by the user. This not only helps improve accuracy of the permission check when the user accesses the file node or the directory node, to help improve security and reliability of the file service provided by the object storage system, but also helps improve diversity of permission check manners when the user accesses the object, to help improve user experience.

Optionally, if the operation permission corresponding to the operation request includes the target operation type, it is determined that the permission check result is that the check succeeds.

For example, the operation permission corresponding to the operation request includes rx, and the target operation is the read operation (namely, r). Because rx includes r, the permission check result is that the check succeeds.

Optionally, if the operation permission corresponding to the operation request does not include the target operation type, it is determined that the permission check result is that the check fails.

For example, the operation permission corresponding to the operation request includes rx, and the target operation is the write operation (namely, w). Because rx does not include w, the permission check result is that the check fails.

Optionally, in step 205, the object storage service node responds to the operation request based on the permission check result.

In an example, the permission check result is that the check succeeds. To be specific, the target file user has the permission to perform the target operation on the target node.

Based on this, the responding to the operation request may include: performing the target operation on the target node based on the operation request. The performing the target operation on the target node based on the operation request may also be considered as processing the operation request.

Alternatively, the responding to the operation request may include: performing the target operation on the target node based on the operation request, and sending fifth response information to the first client.

The fifth response information indicates that the permission check succeeds or the permission is granted. For example, the fifth response information may include a status code (Status-Code), and the status code may be 200, representing that the permission check succeeds or the permission is granted.

In this embodiment, when the permission check result is that the check succeeds, the object storage service node sends the fifth response information to the first client, to help the user know the permission check result in a timely manner, thereby improving user experience.

In another example, the permission check result is that the check fails. To be specific, the target file user has no permission to perform the target operation on the target node.

Based on this, the responding to the operation request may include: sending sixth response information to the first client. The sixth response information indicates that there is no permission or the permission check fails. For example, the sixth response information may include a status code (Status-Code), and the status code may be 403, representing that the permission check fails or there is no permission.

In this embodiment, when the permission check result is that the check fails, the object storage service node sends the response information to the first client, to help the user know the permission check result in a timely manner, thereby improving user experience.

The permission check method described in the foregoing embodiment is a solution in which check verification is performed on the target file user who sends the operation request to the object storage service node via the first client. Different from the foregoing solution, an embodiment of this application further provides another permission check method. The another permission check method is a solution in which a permission check is performed on a target object user who sends an operation request to an object storage service node via a second client.

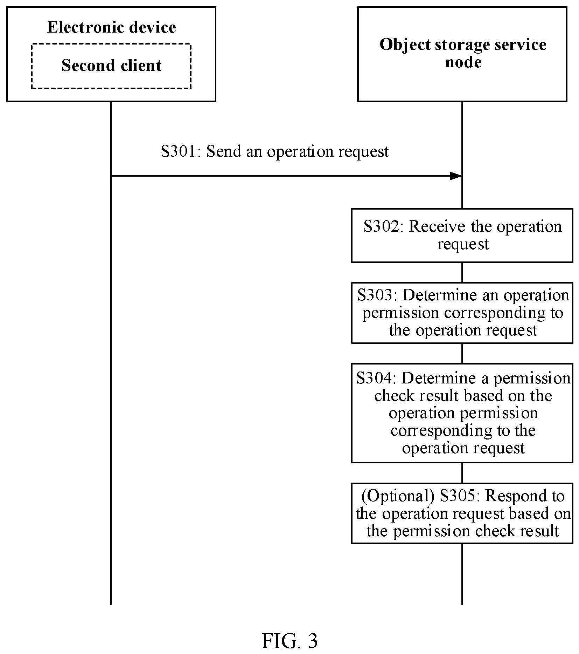

The following describes differences between the two solutions in detail with reference to FIG. 3, and same parts are not described again.

FIG. 3 is a flowchart of another permission check method according to an example embodiment. For example, the permission check method may include the following step 301 to step 305.

Optionally, a second client is installed on an electronic device. When the second client sends an operation request to an object storage service node, a user identifier carried in the operation request is an object user identifier.

It should be noted that, to distinguish users using different clients to send operation requests to the object storage service node, a user using the second client may be referred to as an object user, and details are not described subsequently.

It should be noted that the second client may be an object storage client, or may be another client that carries the object user identifier when communicating with the object storage service node. This is not limited in this embodiment of this application.

It should be noted that, in this embodiment of this application, that the second client performs an operation, for example, sending the operation request to the object storage service node, may be considered as that the electronic device performs the operation via the second client, or the electronic device performs the action in a process of running the second client.

Step 301: The second client sends the operation request to the object storage service node.

In an example, a user logs in to the second client via the electronic device, and performs, via the second client, a target operation such as a read operation, a write operation, or a delete operation on a target node/target object. The second client sends the operation request to the object storage service node in response to the target operation performed by the user on the target node/target object.

In another example, when the electronic device needs to perform a target operation on a target node/target object in a process of running a file application/an object application, the file application/object application sends a request to the second client. The second client sends the operation request to the object storage service node in response to the received request.

In this embodiment of this application, the operation request may include a target object user identifier. The target object user identifier is an identifier of a target object user who sends the operation request to the object storage service node via the second client. That is, the target object user is an object user requesting to perform the target operation on the target node.

For example, the user inputs an object account name and a password on a login UI of the second client displayed by the electronic device, and logs in to the second client. Then, when the second client sends the operation request to the object storage service node through an object interface (for example, a REST API), a target object user identifier corresponding to the object account name is carried. The electronic device may store a correspondence between the object account name and the target object user identifier.

It should be noted that, for related descriptions of step 301, refer to step 201. Details are not described herein again.

Step 302: The object storage service node receives the operation request sent by the second client.

For example, the object storage service node may receive, through the object interface, the operation request sent by the second client.

For example, when the operation request is a write request, the object interface may be PUT/filesystem/dir/file. When the operation request is a read request, the object interface may be GET/filesystem/dir/file. When the operation request is a delete request, the object interface may be DELETE/filesystem/dir/file.

It should be noted that step 302 may be considered as another implementation of "receiving, by the object storage service node, the operation request."

Step 303: The object storage service node determines an operation permission corresponding to the operation request.

Step 303 is implemented in multiple manners. Manner A and Manner B are used as examples below for description.

Manner A: The object storage service node determines, based on a file ACL corresponding to a target identifier and a file user identifier associated with the operation request, the operation permission corresponding to the operation request.

In this embodiment of this application, when the operation request includes the target object user identifier, a file user identifier corresponding to the target object user identifier is the file user identifier associated with the operation request.

The following describes, by using an example, a process of determining the object user identifier included in the operation request.

In an example, token (token) authentication is used when the object storage service node communicates with the second client, and the object storage service node stores a correspondence between a token and the object user identifier. The operation request sent by the second client to the object storage service node carries a target token. After receiving the operation request, the object storage service node determines, based on the target token and the stored correspondence, the object user identifier included in the operation request, that is, the target object user identifier corresponding to the target token.

In another example, Ak/Sk authentication is used when the object storage service node communicates with the second client, and the object storage service node stores a correspondence between an AK and the object user identifier. The operation request sent by the second client to the object storage service node carries a target access key identifier (access key id, AK). After receiving the operation request, the object storage service node determines, based on the target AK and the stored correspondence, the object user identifier included in the operation request, that is, the target object user identifier corresponding to the target AK.

Step 303a to step 303c are used as an example below to describe Manner A.

Step 303a: Determine, based on a user mapping relationship, the file user identifier corresponding to the target object user identifier as a target file user identifier.

The file user identifier corresponding to the target object user identifier is the file user identifier associated with the operation request. That is, the target object user identifier is an object user identifier associated with the operation request.

In this embodiment of this application, the object storage service node stores the user mapping relationship, and the user mapping relationship includes a correspondence between at least one object user identifier and at least one file user identifier. After receiving the operation request, the object storage node determines, based on the user mapping relationship, the file user identifier corresponding to the target object user in the operation request, to obtain the file user identifier associated with the operation request.

For example, the target object user identifier is abc1, and the user mapping relationship includes a correspondence between abc1 and 6668. Based on this, the object storage service node determines 6668 as the target file user identifier.

Optionally, the permission check method further includes: If the user mapping relationship does not include the file user identifier corresponding to the target object user identifier, the object storage service node sends second response information. The second response information indicates no permission.

In this embodiment, when the file user identifier corresponding to the target object user identifier does not exist in the user mapping relationship, the response information is sent to the object storage client, to notify the user that the user does not have an access permission, so that the user adjusts an access policy in a timely manner.

It should be noted that, for other related descriptions of step 303a, refer to step 203b. Details are not described herein again.

Step 303b: Determine, based on a file ACL of the target object, a file permission corresponding to the target file user identifier.

Step 303c: Determine the file permission corresponding to the target file user identifier as the operation permission corresponding to the operation request.

It should be noted that, for related descriptions of step 303b and step 303c, refer to Manner 1 in step 203. Details are not described herein again.

It should be noted that Manner A may be considered as still another specific implementation of "determining the operation permission of the operation request based on the file ACL of the target identifier and the file user identifier associated with the operation request."

In this manner, a file permission corresponding to the file user identifier associated with the operation request is used as the operation permission corresponding to the operation request, so that only the file permission is used to determine a permission check result. This helps improve check efficiency.

Manner B: The object storage service node determines, based on a file ACL corresponding to the target identifier, a file user identifier associated with the operation request, an object ACL corresponding to the target identifier, and a target object user identifier included in the operation request, the operation permission corresponding to the operation request.

Step 303d to step 303g are used as an example below to describe Manner B.

Step 303d: Determine, based on a user mapping relationship, a file user identifier corresponding to the target object user identifier as a target file user identifier.

It should be noted that, for related descriptions of step 303d, refer to step 303a. Details are not described herein again.

Step 303e: Determine, based on a file ACL of the target object, a file permission corresponding to the target file user identifier.

It should be noted that, for descriptions of step 303e, refer to the descriptions of Manner 1 in step 203. Details are not described herein again.

Step 303f: Determine, based on an object ACL of the target object, an object permission corresponding to the target object user identifier.

It should be noted that, for descriptions of step 303f, refer to the descriptions in step 203c. Details are not described herein again.

Step 303g: Determine a minimum permission in the file permission corresponding to the target file user identifier and the object permission corresponding to the target object user identifier as the operation permission corresponding to the operation request.

It should be noted that, for descriptions of step 303g, refer to the descriptions in step 203d. Details are not described herein again.

It should be noted that Manner B may be considered as still another specific implementation of "determining the operation permission of the operation request based on the file ACL of the target identifier and the file user identifier associated with the operation request."

In this manner, the minimum permission in the file permission corresponding to the target file user identifier and the object permission corresponding to the target object user identifier is used as the permission corresponding to the operation request, to determine the permission check result based on the minimum permission in the file permission and the object permission. This helps improve a standard of the permission check, and helps improve reliability and security of a file service provided by the object storage service node.

Step 304: The object storage service node determines the permission check result based on the operation permission corresponding to the operation request and a target operation type.

It should be noted that, for related descriptions of step 304, refer to step 204. Details are not described herein again.

In the foregoing embodiment, the object storage service node provides the user with a file permission check service, namely, a permission check service that conforms to file semantics. When the user requests, via the second client, to send the operation request to the object storage service node, after receiving the operation request, the object storage service node determines, based on the target identifier indicated by the operation request, the file ACL using the target object, and the file user identifier included associated with the operation request, the operation permission corresponding to the operation request, and determines the permission check result based on a relationship between the target operation type and the operation permission corresponding to the operation request.

Because the file ACL that conforms to the file semantics is used to perform a permission check on the target operation requested by the user, a fine-grained permission check that conforms to the file semantics is performed on the target operation requested by the user. This not only helps improve accuracy of the permission check when the user accesses the file node or the directory node, to help improve security and reliability of the file service provided by the object storage system, but also helps improve diversity of permission check manners when the user accesses the object, to help improve user experience.

Optionally, in step 305, the object storage service node responds to the operation request based on the permission check result.

It should be noted that, for related descriptions of step 305, refer to step 205. Details are not described herein again.

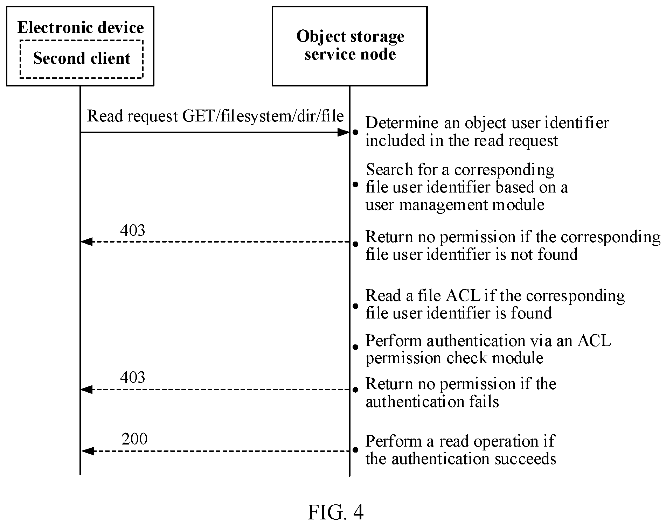

In this embodiment of this application, the operation request may be a read request. The following describes a permission check process of the read request by using an example with reference to FIG. 4.

FIG. 4 is a diagram of a permission check of a read request according to an embodiment of this application.

The user/file application/object application sends the read request to the object storage service node via the second client. For example, the read request may be "GET/filesystem/dir/file", and the read request carries a token/an AK. After receiving the read request, the object storage service node parses the read request to obtain an object user identifier corresponding to the token/AK in the read request, so as to determine the object user identifier included in the read request. Then, the object storage service node searches for a file user identifier corresponding to the object user identifier via a user management module, to determine a file user identifier associated with the read request. If the corresponding file user identifier is not found, the object storage service node returns no permission (no permission) (for example, may return an operation code 403) to the second client. If the corresponding file user identifier is found, the object storage service node reads a file ACL of a target identifier based on the target identifier indicated by the read request, and performs a permission check (namely, authentication) via a permission module. If the authentication fails (that is, the permission check fails), the object storage service node returns no permission to the second client. If the authentication succeeds (that is, the permission check succeeds), the object storage service node returns that the request succeeds (for example, may return an operation code 200) to the second client, and performs a read operation, that is, obtains a target element (namely, a target node/target object) indicated by the target identifier, and returns the target element to the second client.

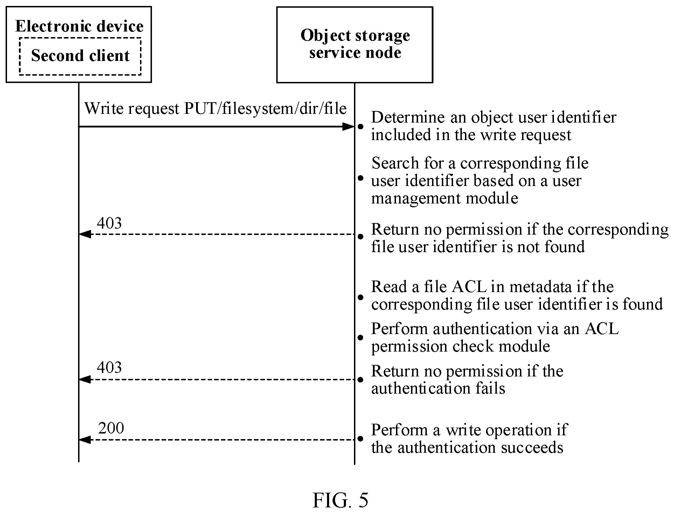

In this embodiment of this application, the operation request may be a write request. The following describes a permission check process of the write request by using an example with reference to FIG. 5.

FIG. 5 is a diagram of a permission check of a write request according to an embodiment of this application.

The user/file application/object application sends the write request to the object storage service node via the second client. For example, the write request may be "PUT/filesystem/dir/file", and the write request carries a token/an AK. After receiving the write request, the object storage service node parses the write request to obtain an object user identifier corresponding to the token/AK in the write request, so as to determine the object user identifier included in the write request. Then, the object storage service node searches for a file user identifier corresponding to the object user identifier via a user management module, to determine a file user identifier associated with the write request. If the corresponding file user identifier is not found, the object storage service node returns no permission (no permission) (for example, may return an operation code 403) to the second client. If the corresponding file user identifier is found, the object storage service node reads a file ACL of a target identifier based on the target identifier indicated by the write request, and performs authentication (namely, a permission check) via a permission module. If the authentication fails (that is, the permission check fails), the object storage service node returns no permission to the second client. If the authentication succeeds (that is, the permission check succeeds), the object storage service node returns that the request succeeds (for example, may return an operation code 200) to the second client, and performs a write operation, that is, performs the write operation on a target element (namely, a target node/target object) indicated by the target identifier.

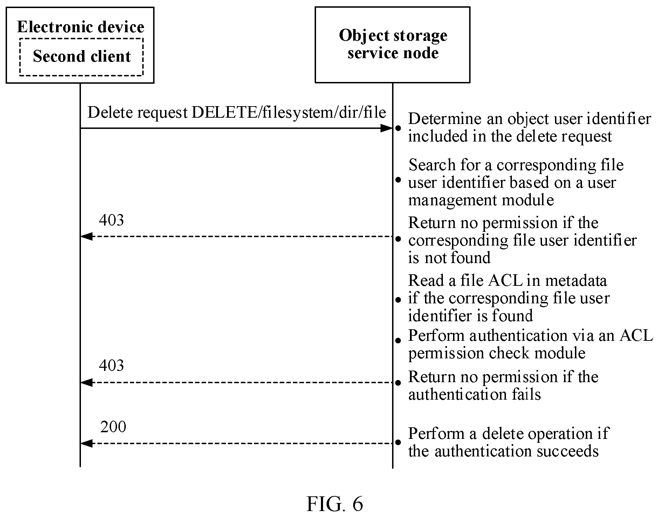

In this embodiment of this application, the operation request may be a delete request. The following describes a permission check process of the delete request by using an example with reference to FIG. 6.

FIG. 6 is a diagram of a permission check of a delete request according to an embodiment of this application.

The user/file application/object application sends the delete request to the object storage service node via the second client. For example, the delete request may be "DELETE/filesystem/dir/file", and the delete request carries a token/an AK. After receiving the delete request, the object storage service node parses the delete request to obtain an object user identifier corresponding to the token/AK in the delete request, so as to determine the object user identifier included in the delete request. Then, the object storage service node searches for a file user identifier corresponding to the object user identifier via a user management module, to determine a file user identifier associated with the delete request. If the corresponding file user identifier is not found, the object storage service node returns no permission (no permission) (for example, may return an operation code 403) to the second client. If the corresponding file user identifier is found, the object storage service node reads a file ACL of a target identifier based on the target identifier indicated by the delete request, and performs authentication (namely, a permission check) via a permission module. If the authentication fails (that is, the permission check fails), the object storage service node returns no permission to the second client. If the authentication succeeds (that is, the permission check succeeds), the object storage service node returns that the request succeeds (for example, may return an operation code 200) to the second client, and performs a delete operation, that is, deletes a target element (namely, a target node/target object) indicated by the target identifier.

The foregoing embodiment describes a solution in which the object storage service node performs the permission check. An embodiment of this application further provides another solution. The another solution is a solution in which a file ACL is configured for an object stored in an object storage service node, and may also be referred to as a permission setting solution. The following describes differences between the two solutions in detail with reference to FIG. 7, and same parts are not described again.

FIG. 7 is a flowchart of a permission setting method according to an example embodiment. For example, the permission setting method includes the following step 701 to step 706.

Optionally, a third client is installed on an electronic device. The third client may be configured to send a file permission setting request to an object storage service node, to request to configure a file ACL for an object stored in the object storage service node.

For example, the third client may be a console (console) client, or may be another client that can configure the file ACL for the object stored in the object storage service node. This is not limited in this embodiment of this application.

It should be noted that, in the following embodiment, that the third client performs an operation, for example, sending the file permission setting request to the object storage service node, may be considered as that the electronic device performs the operation via the third client, or the electronic device performs the action in a process of running the third client. Details are not described subsequently.

It should be noted that the electronic device running the third client and the electronic device running the first client/second client may be a same electronic device, or may be different electronic devices. This is not limited in this embodiment of this application.

In addition, the third client and the first client/second client may be clients of a same type, or may be clients of different types. This is not limited in this application.

A target object stored in the object storage service node is used as an example below to describe the permission setting method provided in this embodiment of this application.

Step 701: The third client obtains a file ACL corresponding to a target identifier.

In this embodiment of this application, when a user needs to set a file permission for the target object/a target node, for example, set an ACL permission, the user may add a file permission for an access control policy of the target object based on the target identifier (namely, an identifier of the target object/target node), that is, set a permission that conforms to file semantics for the access control policy of the target object. In this way, when the user requests to perform a target operation on the target object/target node, the object storage service node may perform, based on the access control policy of the target object, a permission check that conforms to the file semantics.

In this embodiment of this application, step 701 may be implemented in multiple manners. Manner 1 to Manner 3 are used as examples below for description.

Manner 1: The third client obtains, based on a second control on a second UI, the file ACL corresponding to the target identifier.

The second control indicates the file ACL.

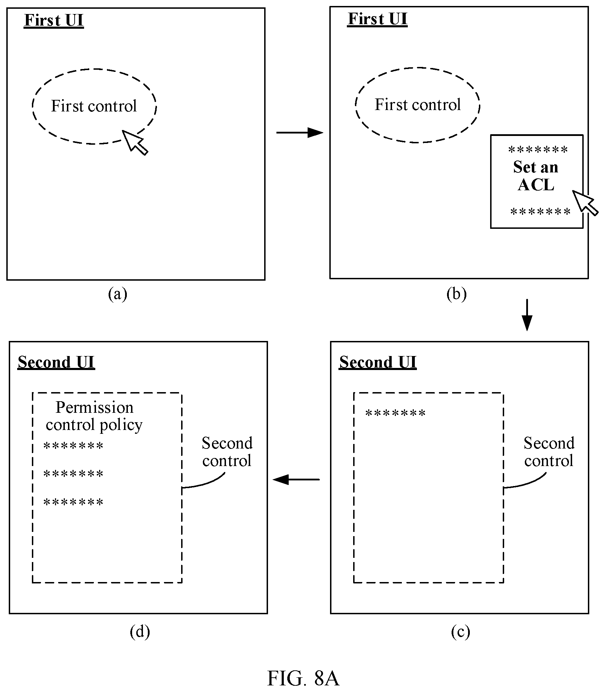

For example, as shown in (a) in FIG. 8A, after the user logs in to the third client via the electronic device, the third client displays a first UI via the electronic device. The first UI includes a first control, and the first control indicates the target object/target node. As shown in (b) in FIG. 8A, the user performs a trigger operation on the first control, for example, selects the first control and right-clicks a mouse. After the third client displays an option page of the first control via the electronic device, the user selects a "Set an ACL" option on the option page.

As shown in (c) in FIG. 8A, the third client displays the second UI via the electronic device in response to the trigger operation of the user for the first control. The second UI includes the second control, and the second control indicates the file ACL. The user performs an input operation on the second control, for example, the user inputs the file ACL on the second control, as shown in (d) in FIG. 8A. The third client obtains the file ACL in response to the input operation of the user for the second control, and displays the file ACL on the second control via the electronic device.

In this manner, the third client provides a UI for editing the file ACL for the user, so that the user can edit the file ACL on the second control, to visualize a setting process. This helps improve operation convenience and user experience.

Optionally, the second control indicates the access control policy, and the access control policy includes an object ACL and the file ACL.

In this embodiment, the file ACL is added to the access control policy of the target object, to extend an operation procedure of setting the object ACL to setting both the object and the file ACL. That is, the operation procedure of setting the object ACL is the same as an operation procedure of setting the file ACL, so that the user does not need to learn a new operation procedure, to improve user experience.

Manner 2: The third client obtains, based on a fifth control on a fifth UI, the file ACL corresponding to the target identifier.

The fifth control indicates a storage address of a permission file, and the permission file includes the file ACL.

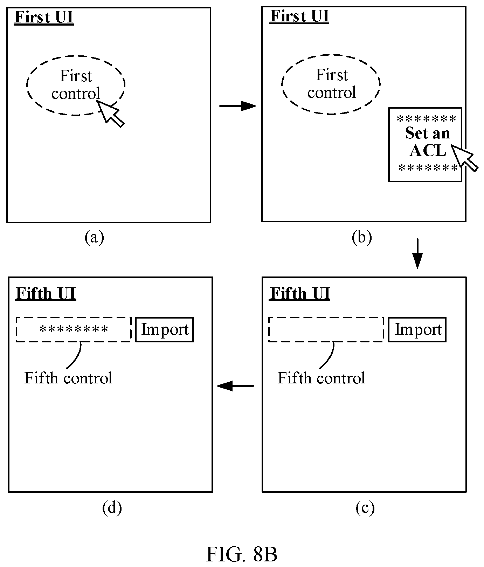

For example, as shown in (a) in FIG. 8B, after the user logs in to the third client via the electronic device, the third client displays a first UI via the electronic device. The first UI includes a first control, and the first control indicates the target object/target node. As shown in (b) in FIG. 8B, the user performs a trigger operation on the first control, for example, selects the first control and right-clicks a mouse. After the third client displays an option page of the first control via the electronic device, the user selects a "Set an ACL" option on the option page.

As shown in (c) in FIG. 8B, the third client displays the fifth UI via the electronic device in response to the trigger operation for the first control. The fifth UI includes the fifth control and an import control. The user performs a trigger operation on the import control. For example, the user clicks the import control. The third client displays, via the electronic device, a directory in which the permission file is located, and the user selects the permission file. As shown in (d) in FIG. 8B, the third client obtains the storage address of the permission file in response to the trigger operation of the user for the import control, and displays the storage address of the permission file on the fifth control. The third client may obtain the permission file based on the storage address, to obtain the file ACL of the target identifier.

In this manner, the third client provides an import UI of the file ACL for the user, so that the user can import a pre-edited file ACL into the third client as the file ACL corresponding to the target identifier. In this way, one file ACL can be used for multiple different objects/nodes. This helps prevent the user from repeatedly editing the file ACL, to help improve user experience and efficiency of setting the file permission for the target object.

Manner 3: The third client obtains, based on a target application, the file ACL corresponding to the target identifier.

A code of the target application includes the file ACL.

For example, the third client invokes the target application to obtain the file ACL from the code of the target application.

In this manner, the file ACL is preset in the code of the target application, so that the file ACL corresponding to the target identifier is automatically obtained by running the target application. This helps improve convenience of obtaining the file ACL.

In addition, when the user needs to set file permissions for multiple nodes/objects, the code of the target application may include file ACLs of the multiple nodes/objects, so that the file ACLs of the multiple nodes/objects can be obtained at a time via the target application. This helps improve convenience and efficiency of a permission setting operation, to help improve user experience.

It should be noted that a manner of obtaining the file ACL is not limited in this embodiment of this application, and the foregoing is merely an example for description.

Step 702: The third client sends a file permission setting request to the object storage service node.

The file permission setting request is used to request to set the ACL permission, and the permission setting request includes the target identifier and the file ACL corresponding to the target identifier.

Optionally, step 702 may include: The third client sends the file permission setting request to the object storage service node through an object ACL setting interface.

The object ACL setting interface is an interface that is provided by the object storage service node and that is configured to set an object ACL for an object.

Based on Manner 1 in step 701, the "Set an ACL" option on the option page of the first control is associated with the object ACL setting interface, and the object ACL setting interface may be configured to set the file ACL and the object ACL. In this case, the file ACL and the object ACL may be set through a same interface, namely, the object ACL setting interface.

For example, a type of the object ACL setting interface may be a REST API interface, and the object ACL setting interface may be PUT/ObjectName?acl. "PUT" is used to represent setting (or updating), "ObjectName" is used to represent the target identifier, and "ac1" is used to represent an ACL. For example, ObjectName may be filesystem/dir/file, that is, the target identifier may be filesystem/dir/file.

In this embodiment of this application, a REST API interface of an object is extended, so that semantics of a file ACL is added to an access control policy of the object. As the HTTP protocol has good extensibility, the file ACL is set by extending the REST API interface. The implementation process is simple, and costs are low.

In this embodiment of this application, after obtaining the file ACL corresponding to the target identifier, the third client invokes the object ACL setting interface provided by the object storage service node, to send the file permission setting request to the object storage service node.

In an example, the second UI may further include a send control. After inputting the file ACL on the second control, the user clicks the send control. In response to the trigger operation of the user for the send control, the third client invokes the object ACL setting interface to send the file permission setting request to the object storage service node.

For example, after the user selects the "Set an ACL" option, the object ACL setting interface may be automatically displayed on the second control, that is, the second control may further indicate the object ACL setting interface.

In another example, the permission file may include the object ACL setting interface. The fifth UI may further include a send control. After the store address of the permission file is displayed on the fifth control, the user clicks the send control. In response to the trigger operation of the user for the send control, the third client invokes the object ACL setting interface in the permission file, to send the file permission setting request to the object storage service node.

In still another example, the code of the target application may further include the object ACL setting interface. The third client may invoke the object ACL setting interface in the code of the target application, to send the file permission setting request to the object storage service node.

In this embodiment, the file ACL is set through the object ACL setting interface provided by the object storage service node. An existing interface of the object storage service node is fully used, and a cloud service provider does not need to develop a new interface for the object storage service node, and the new interface is specially configured to set the file ACL. This helps reduce costs of a cloud service. In addition, a cloud service user does not need to learn and master the new interface either. This helps reduce difficulty in setting the file ACL, to help improve user experience.

In this embodiment of this application, the third client may alternatively set the file ACL through another interface other than the object ACL setting interface provided by the object storage service node, for example, a file ACL setting interface.

In this manner, the object storage service node provides an independent interface for setting the file permission for the user. In this way, after obtaining the file ACL, the client may invoke the file ACL setting interface to send the file permission setting request to the object storage service node, to set the object ACL and the file ACL through different interfaces. This helps ensure independence of interfaces with different functions.

It should be noted that, in this embodiment of this application, an interface used by the third client to send the file permission setting request to the object storage service node is not limited, and the foregoing is merely an example for description.

Step 703: The object storage service node receives the file permission setting request sent by the third client.

The permission setting request includes the target identifier and the file ACL corresponding to the target identifier.

In an example, the object storage service node may receive, through the object ACL setting interface, the file permission setting request sent by the third client. In another example, the object storage service node may receive, through the file ACL setting interface, the file permission setting request sent by the third client.

Step 704: The object storage service node stores the file ACL corresponding to the target identifier in the object storage service node based on the target identifier.

In this embodiment of this application, after receiving the file permission setting request, the object storage service node stores, in the object storage service node based on the target identifier in the file permission setting request, the file ACL in the file permission setting request, to configure the file ACL for the target object stored in the object storage service node.

In an example, the object storage service node may store, in metadata of the target object indicated by the target identifier, the file ACL in the file permission setting request. In this way, when a permission check is performed on the operation request that carries the target identifier, accuracy of the obtained file ACL corresponding to the target identifier is improved.

In another example, the object storage service node may store, in a separate storage device, the file ACL in the file permission setting request. In this way, file ACLs of multiple objects stored in the object storage service node can be stored in a centralized manner, thereby helping improve convenience of file ACL storage.

It should be noted that the following describes this embodiment of this application by using an example in which the file ACL is stored in the metadata of the target object.

In this embodiment of this application, the file ACL may include one or more ACEs. One ACE includes one file user identifier and a file permission corresponding to the file user identifier.

On this basis, step 704 may include: The object storage service node stores each ACE of the file ACL in the metadata of the target object based on the target identifier.

In this embodiment of this application, after receiving the file permission setting request, the object storage service node may parse each ACE of the file ACL, and store each ACE in the metadata of the target object.

For example, the file ACL is stored as an XML body. The object storage service node parses each ACE of the file ACL from the XML body, and stores the ACE in the metadata of the target object.

In this embodiment, the object storage service node is set to separately store each ACE of the file ACL. In this way, when the file ACL is subsequently updated, for example, added, deleted, overridden, or modified, a single ACE may be updated. Compared with updating the entire file ACL, this helps improve update accuracy of the file ACL, to help improve update convenience and update efficiency.

How to store the file ACL is implemented in multiple manners. Manner a and Manner b are used as examples below for description.

Manner a: The object storage service node writes the file ACL into the access control policy of the target object.

The metadata of the target object includes the access control policy, and the access control policy includes an object ACL of the target object.

For example, before setting the file ACL for the target object, the user has set the object ACL for the target object, that is, the access control policy of the target object includes the object ACL of the target object.

Optionally, when the third client sends the file permission setting request to the object service node through the object ACL setting interface, the object storage service node writes the file ACL in the operation request into the access control policy of the target object, that is, stores the object ACL and the file ACL of the target object in a same XML body.

In this manner, the file ACL is written into the access control policy of the target object, so that the file ACL and the object ACL of the target object are stored in one file. In this way, when both a file permission and an object permission are checked for the target node/target object, the object storage service node needs to read only one file (for example, the XML body) to obtain both the file ACL and the object ACL. This helps improve permission check efficiency.

Optionally, the object storage service node may write each ACE of the file ACL into the access control policy of the target object. This helps improve the update accuracy of the file ACL, to help improve the update convenience and the update efficiency.

Manner b: The object storage service node stores the file ACL in the metadata of the target object.

For example, after receiving the file permission setting request, the object storage service node may separately store, in the metadata of the target object, the file ACL in the file permission setting request, that is, store the file ACL and the object ACL of the target object in two different files (for example, XML bodies).

In this manner, each ACE of the file ACL in the file permission setting request may be written into the metadata of the target object. This helps improve the update accuracy of the file ACL, to help improve the update convenience and the update efficiency.

For example, when the third client sends the file permission setting request to the object service node through the another interface other than the object ACL setting interface, for example, the file ACL setting interface, the object storage service node writes the file ACL in the file permission setting request into the metadata of the target object, that is, stores the object ACL and the file ACL of the target object in two different XML bodies.

In this manner, the file ACL is stored in the metadata of the target object as an independent ACL file. This helps avoid confusion between the file ACL and the object ACL of the target object or a row error during storage, to help ensure accuracy of the file ACL, so as to help ensure accuracy of an ACL permission check performed on the user accessing the target node.

In the foregoing embodiment, after receiving the file permission setting request, the object storage service node stores, in the object storage service node based on the target identifier (namely, the identifier of the target object/target node) included in the file permission setting request, the file ACL corresponding to the target identifier in the file permission setting request, for example, stores the file ACL in the metadata of the target object, to configure the file ACL for the target object. Because the file ACL includes the file user identifier (for example, uid or gid) and the file permission (for example, r, w, or x), an element representing a file user and an element representing the file permission are added for the access control policy of the target object, so that the access control policy of the target object better conforms to the file semantics, and the object storage server node can provide a fine-grained permission check that conforms to the file semantics.

Optionally, in step 705, the object storage service node sends seventh response information to the third client.

The seventh response information indicates a file permission setting result.

It should be noted that for related descriptions of the seventh response information, refer to the descriptions of the fifth response information and the sixth response information in S205. Details are not described herein.

In this embodiment of this application, the object storage service node may send the seventh response information to the third client through an interface for receiving the file permission setting request, for example, the object ACL setting interface or the file ACL setting interface.

Optionally, in step 706, the third client receives the seventh response information sent by the object service node.

In this embodiment of this application, after receiving the seventh response information, the third client may directly display a status code in the seventh response information, or may display a status represented by the status code.

In the foregoing embodiment, after storing the file ACL corresponding to the target identifier in the metadata of the target object, the object storage service node sends the seventh response information to the third client, to notify the user of the file permission setting result. This helps the user learn, in a timely manner, whether the file permission setting request succeeds. In this way, when the file permission setting based on the permission setting request fails, resetting is performed in a timely manner, to avoid affecting a subsequent permission check.

In this embodiment of this application, after setting the file ACL for the target object, the user may further update the file ACL of the target object. The following describes, by using an example, a process in which the user updates the file ACL of the target object.

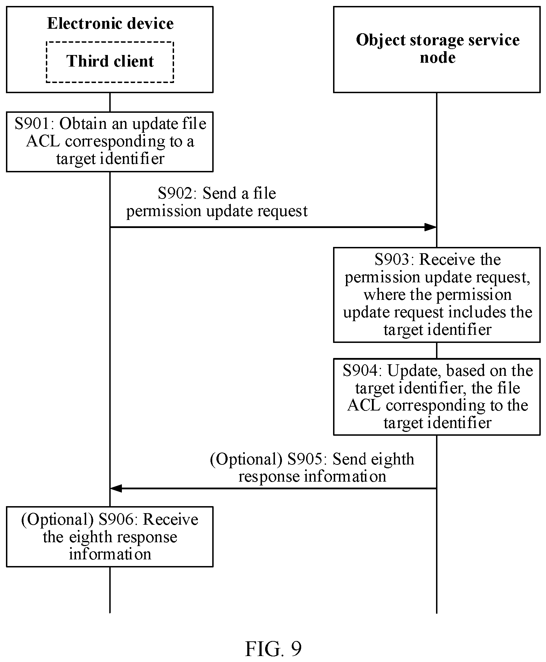

FIG. 9 is a flowchart of a file permission update method according to an example embodiment. For example, the file permission update method includes the following step 901 to step 906.

Step 901: A third client obtains an update file ACL corresponding to a target identifier.

It should be noted that, for related descriptions of step 901, refer to step 701. Details are not described herein again.

Step 902: The third client sends a file permission update request to an object storage service node.

The file permission update request includes the target identifier and the update file ACL corresponding to the target identifier.

Optionally, the file permission update request may further include a setting type of the update file ACL.

The setting type of the update file ACL may include at least one of an add (add) type, a delete (delete) type, an override (override) type, and a modify (modify) type. The setting type may indicate a type of an operation performed on the update file ACL.

In this embodiment, the setting type of the updated file is set in the file permission update request. This helps provide multiple different update manners such as adding, deleting, overriding, and modifying for a user through the file permission update request, to improve flexibility of updating a file ACL, so as to improve user experience.

In this embodiment of this application, a file permission setting request may be a request sent when a file ACL is set for an object for the first time. The file permission update request is a request sent when a file ACL is set for the object not for the first time. Setting the file ACL for the object not for the first time may be considered as updating the file ACL set for the object for the first time.

Optionally, the file permission setting request in step 702 may further include a setting type of the file ACL, and the setting type of the file ACL is the add type. This helps ensure format consistency between setting the file ACL and updating a historical file ACL.

In this embodiment of this application, the setting type of the update file ACL may be stored in the update file ACL.

For example, when the setting type is add (add), the update file ACL may include <type>add</type>. When the setting type is delete (delete), the update file ACL may include <type>delete</type>. When the setting type is override (override), the update file ACL may include <type>override</type>. When the setting type is modify (modify), the update file ACL may include <type>modify</type>.

It should be noted that a manner (for example, a used interface) in which the third client sends the file permission update request to the object storage service node is the same as a manner in which the third client sends the file permission setting request to the object storage service. Therefore, for related descriptions of step 902, refer to step 702. Details are not described herein again.

Step 903: The object storage service node receives the file permission update request sent by the third client.

It should be noted that, for related descriptions of step 903, refer to step 703. Details are not described herein again.

Step 904: The object storage service node updates the file ACL corresponding to the target identifier.

In this embodiment of this application, after receiving the file permission update request, the object storage service node updates, based on the target identifier, the update file ACL, and the setting type of the update file ACL, the file ACL corresponding to the target identifier (that is, a file ACL of a target object stored in the object storage service node).

Optionally, the file ACL includes one or more ACEs. Step 904 includes: The object storage service node updates one or more ACEs in the file ACL corresponding to the target identifier.

In this embodiment of this application, when the file ACL of the target object is updated, one or more ACEs of the file ACL of the target object may be updated. Compared with updating the entire file ACL of the target object, this helps improve update accuracy of the file ACL, to help improve update convenience and update efficiency.

An example in which the file ACL of the target object includes ACE1, ACE2, and ACE3 is used below to describe step 904. ACE1 includes <uid>6668</uid> and <Permission>w</Permission> corresponding to <uid>6668</uid>. ACE2 includes <gid>6670</gid> and <Permission>rw</Permission> corresponding to <gid>6670</gid>. ACE3 includes <uid>other</uid>, <gid>other</gid>, and <Permission>r</Permission> corresponding to <uid>other</uid> and <gid>other</gid>.

It should be noted that, for ease of differentiation, the file ACL of the target object is referred to as a historical file ACL below.

In an example, the update file ACL includes <uid>6669</uid> and <Permission>rwx</Permission> corresponding to <uid>6669</uid>, and the setting type of the update file ACL is add. Based on this, the object storage service node writes <uid>6669</uid> and <Permission>rwx</Permission> corresponding to <uid>6669</uid> into the historical file ACL, that is, adds the update file ACL to the historical file ACL.

In another example, the update file ACL includes <uid>6668</uid> and <Permission>w</Permission> corresponding to <uid>6668</uid>, and the setting type of the update file ACL is delete. Based on this, the object storage service node deletes ACE1 from the historical file ACL, that is, deletes the update file ACL from the historical file ACL.

In still another example, the update file ACL includes <uid>6669</uid> and <Permission>rwx</Permission> corresponding to <uid>6669</uid>, and the setting type of the update file ACL is override. Based on this, the object storage service node overrides ACE1, ACE2, and ACE3 in the historical file ACL with "<uid>6669</uid> and <Permission>rwx</Permission> corresponding to <uid>6669</uid>", that is, overrides the historical file ACL with the update file ACL.

In still another example, the update file ACL includes <uid>6668</uid> and <Permission>rwx</Permission> corresponding to <uid>6668</uid>, and the setting type of the update file ACL is modify. Based on this, the object storage service node modifies a file permission of ACE1 in the historical file ACL to " <Permission>rwx</Permission>", that is, modifies a first ACE in the historical file ACL to a second ACE in the update file ACL. The first ACE and the second ACE have a same file user identifier.

Step 905: The object storage service node sends eighth response information to the third client.

Step 906: The third client receives the eighth response information sent by the object storage service node.

It should be noted that, for related descriptions of step 905 and step 906, refer to step 705 and step 706. Details are not described herein again.

In the foregoing embodiment, the object storage service node provides a function of updating (for example, adding, deleting, overriding, or modifying) the file ACL for the user. When needing to updating the file ACL, the user may send the file permission update request to the object storage service node via the client on the electronic device, and include the identifier of the object/node, the update file ACL, and the setting type of the update file ACL in the file permission update request. In this way, after receiving the file permission update request, the object storage service node may update the historical file ACL of the object/node based on the identifier of the object/node, the update file ACL, and the setting type of the update file ACL. This improves flexibility and convenience of setting the file ACL.

In this embodiment of this application, after setting the file ACL for the target object, the user may further manage the file ACL of the target object. The following describes, by using an example, a process in which the user manages the file ACL of the target object.

Optionally, the file ACL and the object ACL of the target object may be synchronously managed, or the file ACL and the object ACL of the target object are separately managed. This is not limited in this embodiment of this application. The following uses only management of the file ACL of the target object as an example to describe a permission management method provided in embodiments of this application.

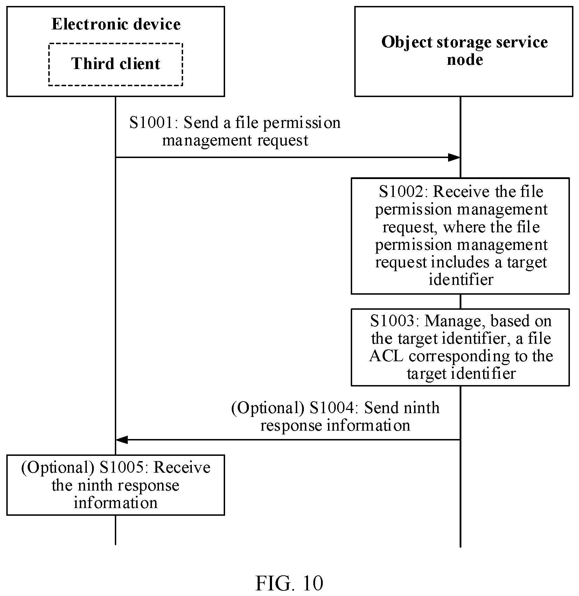

FIG. 10 is a flowchart of a permission management method according to an example embodiment. For example, the permission management method includes the following step 1001 to step 1005.

Step 1001: A third client sends a file permission management request to an object storage service node.

The file permission management request includes a target identifier, and the file permission management request is used to request to manage a file ACL.

It should be noted that when a file ACL and an object ACL are synchronously managed, the permission management request is used to request to manage an ACL of a target object, and the ACL of the target object includes the file ACL and the object ACL.

For example, the object storage service node provides an object ACL management interface, and the object ACL management interface is an interface configured to manage the object ACL. The third client may send the file permission management request to the object storage service node through the object ACL management interface.

It should be noted that, for related descriptions of the object ACL management interface, refer to related descriptions of the object ACL setting interface in step 702. Details are not described herein again.

In this example, the file ACL is managed through the object ACL management interface provided by the object storage service node. The existing interface provided by the object storage service node is fully used, and a cloud service provider does not need to develop a new interface for the object storage service node, and the new interface is specially configured to manage the file ACL. This helps reduce costs of a cloud service. In addition, a cloud service user does not need to learn and master the new interface either. This helps reduce difficulty in managing the file ACL, to help improve user experience.

In this embodiment of this application, the third client may alternatively manage the file ACL through another interface other than the object ACL management interface provided by the object storage service node, for example, a file ACL management interface.

In this example, the object storage service node provides an independent interface for managing the file ACL for the user. In this way, the third client may send the file permission management request to the object storage service node by invoking the file ACL management interface, to manage the object ACL and the file ACL through different interfaces. This helps ensure independence of interfaces with different functions.

In this embodiment of this application, the file permission management request includes multiple cases. Case 1 to Case 2 are used below for description.

Case 1: The file permission management request includes a file permission query request.

The file permission query request is used to request to query a file ACL.

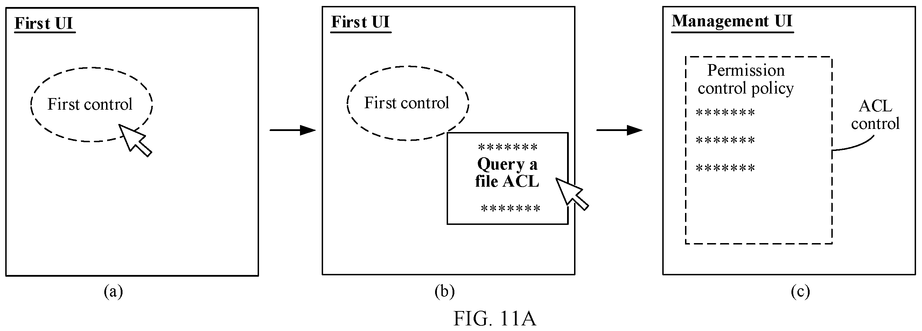

For example, as shown in (a) in FIG. 11A, after the user logs in to the third client via the electronic device, the third client displays a first UI via the electronic device. The first UI includes a first control. As shown in (b) in FIG. 11A, when the user needs to query a file ACL of a target object/target node, the user may perform a second trigger operation on the first control. For example, the user selects the first control and right-clicks a mouse. After the third client displays an option page of the first control via the electronic device, the user selects a "Query a file ACL" option on the option page. The third client sends the file permission query request to the object storage service node in response to the second trigger operation of the user for the first control.

In this embodiment, the file permission management request is set to include the file permission query request, so that the user can query a file ACL that is previously set for the target object, to help the user learn content of the file ACL of the target object in a timely manner.

Optionally, the object ACL management interface includes an object ACL query interface. For example, a type of the object ACL query interface may be a REST API interface, and the object ACL query interface may be GET/ObjectName?acl&type=fileonly. "GET" is used to represent a query, "ObjectName?" is used to represent the target identifier, and "acl&type=fileonly" is used to represent the file ACL.

It should be noted that, when the file ACL and the object ACL are synchronously managed, the object ACL query interface may be GET/ObjectName?acl. In addition, the "Query a file ACL" shown in (b) in FIG. 11A may be "Query an ACL."

It should be noted that the file ACL management interface may also include a file ACL query interface.

In an example, the third client may send the file permission query request to the object storage service node through the object ACL query interface. In another example, the third client may send the file permission query request to the object storage service node through the file ACL query interface.

Case 2: The file permission management request includes a file permission delete request.

The file permission delete request is used to request to delete a file ACL.

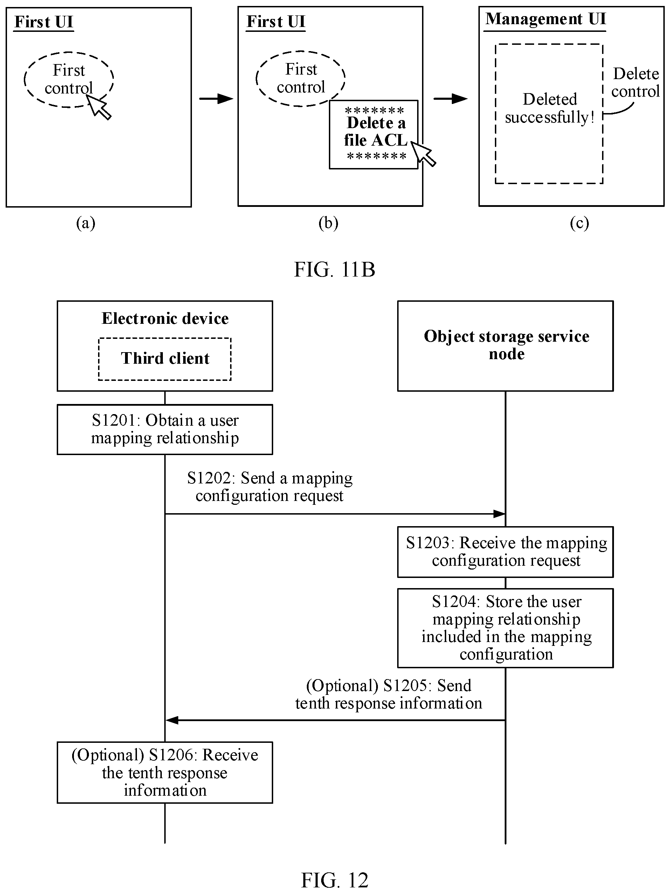

For example, as shown in (a) in FIG. 11B, after the user logs in to the third client via the electronic device, the third client displays a first UI via the electronic device. The first UI includes a first control, and the first control indicates the target node/target object. As shown in (b) in FIG. 11B, when the user needs to delete the file ACL, the user may perform a third trigger operation on the first control. For example, the user selects the first control and right-clicks a mouse. After the third client displays an option page of the first control via the electronic device, the user selects a "Delete a file ACL" option on the option page. The third client sends the file permission delete request to the object storage service node in response to the third trigger operation of the user for the second control.

In this embodiment, the file permission management request is set to include the file permission delete request. In this way, when the user needs to cancel a file permission check on a target node/target object, a file ACL previously set for the target object may be deleted. This helps improve user experience.

Optionally, the object ACL management interface includes an object ACL delete interface.

For example, a type of the object ACL delete interface may be a REST API interface, and the object ACL delete interface may be DELETE/ObjectName?acl&type=fileonly. "DELETE" is used to represent delete, "ObjectName?" is used to represent the target identifier, and "acl&type=fileonly" is used to represent the file ACL.

It should be noted that, when the file ACL and the object ACL are synchronously managed, the object ACL delete interface may be DELETE/ObjectName?acl. In addition, the "Delete a file ACL" shown in (b) in FIG. 11B may be "Delete an ACL."

It should be noted that the file ACL management interface may also include a file ACL delete interface.

In an example, the third client may send the file permission delete request to the object storage service node through the object ACL delete interface. In another example, the third client may send the file permission delete request to the object storage service node through the file ACL delete interface.

Step 1002: The object storage service node receives the file permission management request sent by the third client.

In an example, the object storage service node may receive the file permission management request through the object ACL management interface. In another example, the object storage service node may receive the file permission management request through the file ACL management interface.

Step 1003: The object storage service node manages, based on the target identifier, the file ACL corresponding to the target identifier.

In an example, corresponding to Case 1, the file permission management request includes a file permission query request.

Based on this, the managing the file ACL of the target object includes: obtaining the file ACL from metadata of the target object.

For example, the object storage service node may further edit the file ACL as an XML body, to return the file ACL in the XML body format to the third client.

It should be noted that, when the file ACL and the object ACL are synchronously managed, the object storage service node may obtain the file ACL and the object ACL of the target object from the metadata of the target object.

In another example, corresponding to Case 2, the file permission management request includes a file permission delete request.

Based on this, the managing the file ACL of the target object includes: deleting the file ACL from metadata of the target object.

It should be noted that, when the file ACL and the object ACL are synchronously managed, the object storage service node deletes the file ACL and the object ACL from the metadata of the target object.

Step 1004: The object storage service node sends ninth response information to the third client.

In an example, corresponding to Case 1 in step 1001, when the file permission management request includes the file permission query request, the ninth response information may include the file ACL of the target object.

In another example, corresponding to Case 2 in step 1001, when the file permission management request includes the file permission delete request, the ninth response information includes a deletion result of the file ACL. The deletion result indicates that the deletion succeeds or fails.

Step 1005: The third client receives the ninth response information sent by the object storage service node.

In an example, corresponding to Case 1 in step 1001, when the file permission management request includes the file permission query request, as shown in (c) in FIG. 11A, after the user sends the file permission query request via the third client, the third client displays a management UI via the electronic device after receiving the ninth response information sent by the object storage service node. The management UI includes an ACL control, and the ACL control indicates the file ACL.

It should be noted that when the file ACL and the object ACL are synchronously managed, the third client displays the file ACL and the object ACL of the target object via the electronic device.

In another example, corresponding to Case 2 in step 1001, when the file permission management request includes the file permission delete request, as shown in (c) in FIG. 11B, after the user sends the file permission delete request via the third client, the third client displays a management UI via the electronic device after receiving the ninth response information sent by the object storage service node. The management UI includes a delete control, and the delete control indicates the deletion result of the file ACL of the target object. For example, the deletion result is that the deletion succeeds.

It should be noted that, when the file ACL and the object ACL are synchronously managed, the delete control indicates a deletion result of the file ACL and the object ACL of the target object.

In the foregoing embodiment, the object storage service node provides a function of managing (for example, querying or deleting) the file ACL for the user. When needing to manage the file ACL of the object, the user may send the file permission management request, for example, the file permission query request or the file permission delete request, to the object storage service node via the third client, to manage the file ACL stored in the object storage service node, that is, manage the file ACL that is previously set for the object.

The foregoing embodiments describe a solution in which a file ACL is configured and the file ACL is managed for an object. Based on this, an embodiment of this application further provides another solution. The solution is used to set a user mapping relationship for an object.

FIG. 12 is a flowchart of a user mapping relationship setting method according to an example embodiment. For example, the user mapping relationship setting method includes the following step 1201 to step 1206.

Step 1201: A third client obtains a user mapping relationship.

The mapping relationship includes a correspondence between at least one object user identifier and at least one file user identifier.

Optionally, one object user identifier may correspond to one or more file user identifiers.

That is, one object user identifier may have a correspondence with one file user identifier, or one object user identifier may have a correspondence with multiple file user identifiers.

In this embodiment of this application, one object user identifier and one or more file user identifiers corresponding to the object user identifier may be referred to as one group of correspondences. For example, an object user identifier 1 (for example, abc1) corresponds to uid=6668 and gid=6670; an object user identifier 2 (for example, abc2) corresponds to uid=6669 and gid=6670; an object user identifier 3 (for example, abc3) corresponds to uid=667 and gid=6672; an object user identifier 4 (for example, abc4) corresponds to uid=other and gid=other; and an object user identifier 5 (for example, abc5) corresponds to uid=6674.

It should be noted that the user mapping relationship may include one or more groups of correspondences. This is not limited in this embodiment of this application.

In this embodiment of this application, step 1201 may be implemented in multiple manners. Manner 1 and Manner 2 are used as examples below for description.

Manner 1: The third client obtains a user mapping relationship of a target storage bucket.

The target storage bucket stores a target object. The user mapping relationship of the target storage bucket belongs to each object stored in the target storage bucket. In other words, an application scope of the user mapping relationship of the target storage bucket is each object in the target storage bucket.

In this manner, an object storage service node provides a user with a function of configuring a user mapping relationship for a storage bucket. In this way, when needing to configure a user mapping relationship for each object in the storage bucket, the user may configure the user mapping relationship for each object in the storage bucket by configuring the user mapping relationship for the storage bucket. This helps improve convenience of configuring the user mapping relationship.

Optionally, how to obtain the user mapping relationship is implemented in multiple manners. Manner 1A and Manner 1B are used as examples below for description.

Manner 1A: Obtain the user mapping relationship based on at least one third control on a third UI and at least one fourth control corresponding to the at least one third control.

The third control indicates an object user identifier, and the fourth control indicates a file user identifier.

In this embodiment of this application, one third control may correspond to one or more fourth controls. One third control and one or more fourth controls corresponding to the third control are used to determine one group of correspondences.

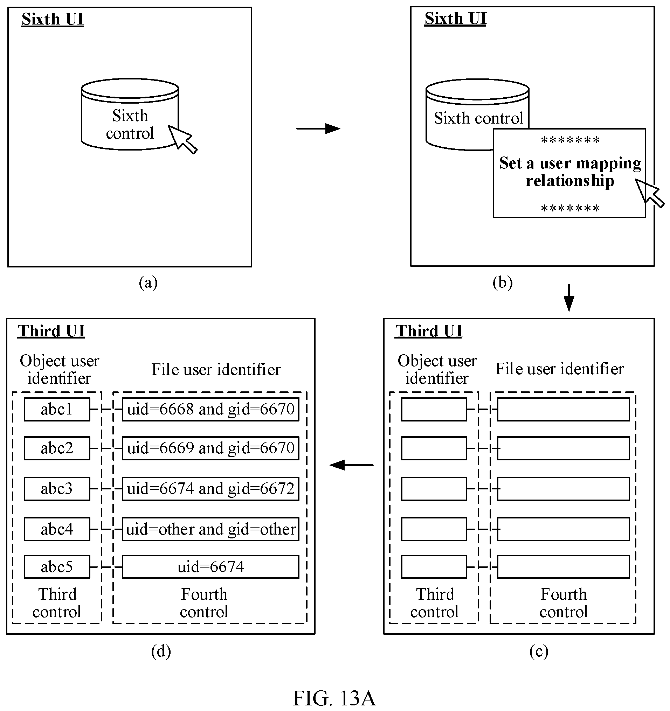

For example, as shown in (a) in FIG. 13A, after the user logs in to the third client via an electronic device, the third client displays a sixth UI via the electronic device. The sixth UI includes a sixth control, and the sixth control indicates the target bucket. As shown in (b) in FIG. 13A, the user performs a trigger operation on the sixth control. For example, the user selects the fifth control and right-clicks a mouse. After the third client displays an option page of the sixth control via the electronic device, the user selects a "Set a user mapping relationship" option on the option page.

As shown in (c) in FIG. 13A, the third client displays a third UI via the electronic device in response to the trigger operation of the user for the sixth control. The third UI includes a third control and a fourth control. The user performs input operations on the third control and the fourth control. For example, the user inputs the object user identifier on the third control, and inputs the file user identifier on the fourth control. As shown in (d) in FIG. 13A, the third client obtains the object user identifier and the file user identifier in response to the input operations of the user for the third control and the fourth control, to obtain the mapping relationship.

It should be noted that quantities of third controls and fourth controls on the third UI are not limited in this embodiment of this application.

In this manner, a configuration UI (for example, the third UI) of the user mapping relationship is provided for the user. When the user mapping relationship needs to be configured, the third client can display the configuration UI via the electronic device of the user, so that the user can edit the user mapping relationship on the controls (for example, the third control and the fourth control) on the configuration UI, to visualize a configuration process. This helps improve operation convenience and user experience.

Manner 1B: Obtain the user mapping relationship based on a seventh control on a seventh UI.

The seventh control indicates a storage address of a mapping file, and the mapping file includes the user mapping relationship.

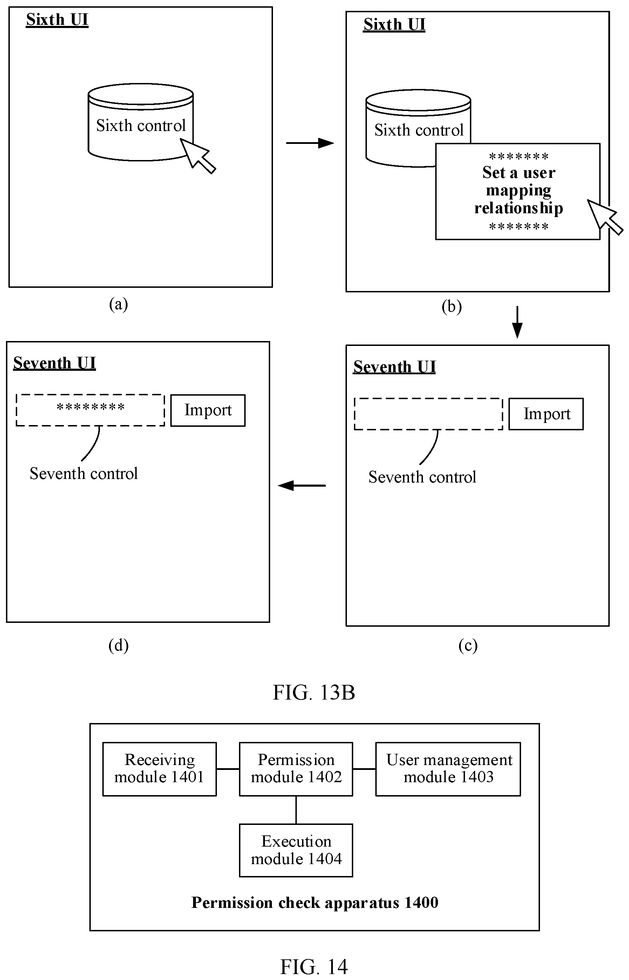

For example, as shown in (a) in FIG. 13B, after the user logs in to the third client via an electronic device, the third client displays a sixth UI via the electronic device. The sixth UI includes a sixth control, and the sixth control indicates the target storage bucket. As shown in (b) in FIG. 13B, the user performs a trigger operation on the sixth control. For example, the user selects the fifth control and right-clicks a mouse. After the third client displays an option page of the sixth control via the electronic device, the user selects a "Set a user mapping relationship" option on the option page.

As shown in (c) in FIG. 13B, the third client displays the seventh UI via the electronic device in response to the trigger operation of the user for the sixth control. The seventh UI includes the seventh control and an import control. The user performs a trigger operation on the import control. For example, the user clicks the import control. The third client displays, via the electronic device, a directory in which the mapping file is located. After the user selects the mapping file, as shown in (d) in FIG. 13B, the third client obtains the storage address of the mapping file in response to the trigger operation of the user for the import control, and displays the storage address on the seventh control. The third client may obtain the mapping file based on the storage address, to obtain the user mapping relationship.

In this manner, an import UI (for example, the seventh UI) of the user mapping relationship is provided for the user. When the user mapping relationship needs to be configured, the third client may display the import UI via the electronic device of the user, so that the user can import a pre-edited user mapping relationship to the client via the import UI. This helps improve convenience and efficiency of configuring the user mapping relationship, and further helps improve user experience.

Manner 2: The third client obtains a user mapping relationship of a target object.

The user mapping relationship of the target object belongs only to the target object. In other words, an application scope of the user mapping relationship of the target object is the target object.

It should be noted that for other related descriptions of Manner 2, for example, how to obtain the user mapping relationship, refer to the descriptions in Manner 1. Details are not described herein.

In this implementation, the object storage service node provides the user with a function of configuring the user mapping relationship for the object. In this way, when the user needs to configure a user mapping relationship for a part of objects in a storage bucket, the user mapping relationship may be configured for the part of the objects. This helps improve accuracy of configuring the user mapping relationship, and further improves user experience.

Step 1202: The third client sends a mapping configuration request to the object storage service node.

The mapping configuration request includes the user mapping relationship.

In this embodiment of this application, after obtaining the user mapping relationship, the third client sends the mapping configuration request to the object storage service node in response to a trigger operation of the user for a send control.

In an example, the third UI further includes the send control, and the send control indicates to send the mapping configuration request. In another example, the seventh UI further includes the send control, and the send control indicates to send the mapping configuration request.

For example, the object storage service node provides a management interface. The third client may send the mapping configuration request to the object storage service node by invoking the management interface.

In this embodiment of this application, the mapping configuration request includes an indication identifier, and the indication identifier indicates an application range of the user mapping relationship.

In an example, the indication identifier is an identifier of the target storage bucket. Based on this, the user mapping relationship may be applied to each object in the target storage bucket. In another example, the indication identifier is an identifier of the target object (namely, a target identifier). Based on this, the user mapping relationship may be applied to the target object.

Step 1203: The object storage service node receives the mapping configuration request sent by the third client.

For example, the object storage service node may receive, through the management interface, the mapping configuration request sent by the third client.

Step 1204: The object storage service node stores the user mapping relationship included in the mapping configuration request.

In an example, corresponding to Manner 1 in step 1201, if the user mapping relationship is the user mapping relationship of the target storage bucket, the object storage service node stores the user mapping relationship in metadata of the target storage bucket. For example, the object storage service node may store the user mapping relationship in the metadata of the target storage bucket based on the indication identifier being the identifier of the target storage bucket.

In another example, corresponding to Manner 2 in step 1201, if the user mapping relationship is the user mapping relationship of the target object, the object storage service node stores the user mapping relationship in metadata of the target object. For example, the object storage service node may store the user mapping relationship in the metadata of the target object based on the indication identifier being the identifier of the target object.

In the foregoing embodiment, the object storage service node provides the user with a function of configuring the user mapping relationship. When the user mapping relationship needs to be configured for the object, the user sends the mapping configuration request to the object storage service node via the third client. After receiving the mapping configuration request, the object storage service node stores, for example, in the metadata of the object or the metadata of the storage bucket in which the object is located, the user mapping relationship included in the mapping configuration request, to configure the user mapping relationship for the object.

On this basis, when the user sends an operation request to the object storage service node via a first client, the object storage service node may determine, based on the user mapping relationship, an object user identifier corresponding to a file user identifier in the operation request. In addition, when the user sends an operation request to the object storage service node via a second client, the object storage service node may determine, based on the user mapping relationship, a file user identifier corresponding to an object user identifier in the operation request.

Optionally, in step 1205, the object storage service node sends tenth response information to the third client.

The tenth response information indicates a configuration result. The configuration result includes that the configuration succeeds or the configuration fails.

It should be noted that, for related descriptions of the tenth response information, refer to the related descriptions of the fifth response information in step 205. Details are not described herein.

Optionally, in step 1206, the third client receives the tenth response information sent by the object storage service node.

In this embodiment of this application, after storing the user mapping relationship, the object storage service node sends the tenth response information to the third client, to notify the configuration result of the user mapping relationship. This helps the user learn, in a timely manner, whether the user mapping relationship is successfully configured, and can perform reconfiguration in a timely manner when the configuration fails.

Based on the foregoing embodiments, the object storage service node implements functions such as storage, update, parsing, query, and a permission check (ACL Permission Check) of the file ACL, and management of mapping between the object user identifier and the file user identifier, to provide a complete file ACL feature, so as to improve the file semantics of the object storage service.

The foregoing mainly describes the solutions provided in embodiments of this application from the perspective of the methods. To implement the foregoing functions, a permission setting apparatus/permission check apparatus includes a corresponding hardware structure and/or software module for performing each function. Persons skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, functional modules of the permission setting apparatus/permission check apparatus may be obtained through division based on the foregoing methods. For example, the permission setting apparatus/permission check apparatus may include each functional module obtained through division corresponding to each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

For example, FIG. 14 is a diagram of a possible structure of a permission check apparatus (denoted as a permission check apparatus 1400) in the foregoing embodiment. An action performed by the permission check apparatus 1400 is implemented by a computing device (for example, an object storage service node) or implemented by a computing device executing corresponding software. The permission check apparatus 1400 includes a receiving module 1401 and a permission module 1402. The receiving module 1401 is configured to receive an operation request, where the operation request includes a target identifier and a target operation type, for example, step 202 shown in FIG. 2 or step 302 shown in FIG. 3. The permission module 1402 is configured to determine, based on a file ACL of the target identifier and a file user identifier associated with the operation request, an operation permission corresponding to the operation request, where the file ACL includes at least one file user identifier and a file permission of the at least one file user identifier, for example, step 203 in FIG. 2 or step 303 in FIG. 3. The permission module 1402 is further configured to determine a permission check result based on the target operation type and the operation permission corresponding to the operation request, where the permission check result is that the check succeeds or the check fails, for example, step 204 shown in FIG. 2 or step 204 shown in FIG. 3.

Optionally, the permission module 1402 is specifically configured to: determine, based on a file ACL of the target identifier, a file permission of a file user identifier associated with the operation request; and determine the file permission of the file user identifier associated with the operation request as the operation permission of the operation request.

Optionally, the permission module 1402 is specifically configured to: determine, based on a file ACL of the target identifier, a file permission of a file user identifier associated with the operation request; determine, based on an object ACL of the target identifier, an object permission of an object user identifier associated with the operation request, where the object ACL of the target identifier includes at least one object user identifier and an object permission of the at least one object user identifier; and determining a minimum permission in the file permission of the file user identifier associated with the operation request and the object permission of the object user identifier associated with the operation request as the operation permission of the operation request.

Optionally, the operation request includes a target file user identifier, and an object user identifier corresponding to the target file user identifier is the object user identifier associated with the operation request. The permission module 1402 is specifically configured to: determine, based on a user mapping relationship, the object user identifier corresponding to the target file user identifier as a target object user identifier, where the user mapping relationship includes a correspondence between the target object user identifier and the target file user identifier; and determine an object permission of the target object user identifier based on the object ACL of the target identifier, where the object permission of the target object user identifier is the object permission of the object user identifier associated with the operation request.

In another possible implementation, the permission module 1402 is further configured to: when the user mapping relationship does not include the target file user, send first response information based on the operation request, where the first response information indicates no permission.

Optionally, the operation request includes a target object user identifier, and the target object user identifier is the object user identifier associated with the operation request. The permission module 1402 is specifically configured to determine an object permission of the target object user identifier based on the object ACL of the target identifier, where the object permission of the target object user identifier is the object permission of the object user identifier associated with the operation request.

Optionally, the operation request includes a target file user identifier, and the target file user identifier is the file user identifier associated with the operation request. The permission module 1402 is specifically configured to determine a file permission of the target file user identifier based on the file ACL of the target identifier, where the file permission of the target file user identifier is the file permission of the file user identifier associated with the operation request.

Optionally, the operation request includes the target object user identifier, and the file user identifier corresponding to the target object user identifier is the file user identifier associated with the operation request. The permission check apparatus 1400 includes a user management module 1403. The user management module 1403 is configured to determine, based on the user mapping relationship, that the file user identifier of the target object user identifier is the target file user identifier, where the user mapping relationship includes a correspondence between the target file user identifier and the target object user identifier. The permission module 1402 is specifically configured to determine the file permission of the target file user identifier based on the file ACL of the target identifier, where the file permission of the target file user identifier is the file permission of the file user identifier associated with the operation request.

In another possible implementation, the permission module 1402 is further configured to: when the user mapping relationship does not include the target object user identifier, send second response information based on the operation request, where the second response information indicates no permission.

In another possible implementation, the permission module 1402 is specifically configured to: if the operation permission corresponding to the operation request includes the target operation type, determine that the permission check result is that the check succeeds; or if the operation permission corresponding to the operation request does not include the target operation type, determine that the permission check result is that the check fails.

Optionally, the apparatus further includes an execution module 1404. The execution module 1404 is configured to process the operation request if the permission check result is that the check succeeds.

Optionally, the permission module 1402 is further configured to: if the permission check result is that the check succeeds, return the permission check result based on the operation request.

Optionally, the permission module 1402 is further configured to: if the permission check result is that the check fails, return the permission check result based on the operation request.

In another possible implementation, when a target node is a target file, the target operation type includes a read operation, a write operation, or a delete operation; or when a target node is a target directory, the target operation includes a read operation, a create operation, a delete operation, a move operation, or a rename operation.

For detailed descriptions of the foregoing optional manners, refer to the foregoing method embodiments. Details are not described herein again. In addition, for descriptions of any explanation and beneficial effect of the permission check apparatus 1400 provided above, refer to the foregoing corresponding method embodiment. Details are not described again.

It should be noted that the permission check apparatus 1400 may be further configured to perform an action performed by a permission setting apparatus 1500 in the following embodiment. Details are not described herein. For details, refer to related descriptions of the following permission setting apparatus 1500.

In this embodiment of this application, the receiving module 1401, the permission module 1402, the user management module 1403, and the execution module 1404 may all be implemented by software, or may be implemented by hardware. For example, the permission module 1402 is used as an example below to describe an implementation of the permission module 1402. Similarly, for implementations of the receiving module 1401, the user management module 1403, and the execution module 1404, refer to the implementation of the permission module 1402.

The module is used as an example of a software functional unit, and the permission module 1402 may include code run on a computing instance. The computing instance may include at least one of a physical host (a computing device), a virtual machine, and a container. Further, there may be one or more computing instances. For example, the permission module 1402 may include code run on multiple hosts/virtual machines/containers. It should be noted that, the multiple hosts/virtual machines/containers configured to run the code may be distributed in a same region (region), or may be distributed in different regions. Further, the multiple hosts/virtual machines/containers configured to run the code may be distributed in a same availability zone (availability zone, AZ), or may be distributed in different AZs. Each AZ includes one data center or multiple data centers that are geographically close to each other. One region may usually include multiple AZs.

Similarly, the multiple hosts/virtual machines/containers configured to run the code may be distributed on a same virtual private cloud (virtual private cloud, VPC), or may be distributed on multiple VPCs. One VPC is usually disposed in one region. A communication gateway needs to be disposed in each VPC for communication between two VPCs in a same region and cross-region communication between VPCs in different regions. The VPCs are interconnected via the communication gateway.

The module is used as an example of a hardware functional unit, and the permission module 1402 may include at least one computing device, for example, a server. Alternatively, the permission module 1402 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

Multiple computing devices included in the permission module 1402 may be distributed in a same region, or may be distributed in different regions. The multiple computing devices included in the permission module 1402 may be distributed in a same AZ, or may be distributed in different AZs. Similarly, the multiple computing devices included in the permission module 1402 may be distributed on a same VPC, or may be distributed on multiple VPCs. The multiple computing devices may be any combination of computing devices such as a server, an ASIC, a PLD, a CPLD, an FPGA, and GAL.

It should be noted that, in another embodiment, the permission module 1402 may be configured to perform any step in the permission check method, the receiving module 1401 may be configured to perform any step in the permission check method, the user management module 1403 may be configured to perform any step in the permission check method, and the execution module 1404 may be configured to perform any step in the permission check method; or steps implemented by the receiving module 1401, the permission module 1402, the user management module 1403, and the execution module 1404 may be specified as required, and the receiving module 1401, the permission module 1402, the user management module 1403, and the execution module 1404 separately implement different steps in the permission check method to implement all functions of the permission check apparatus.

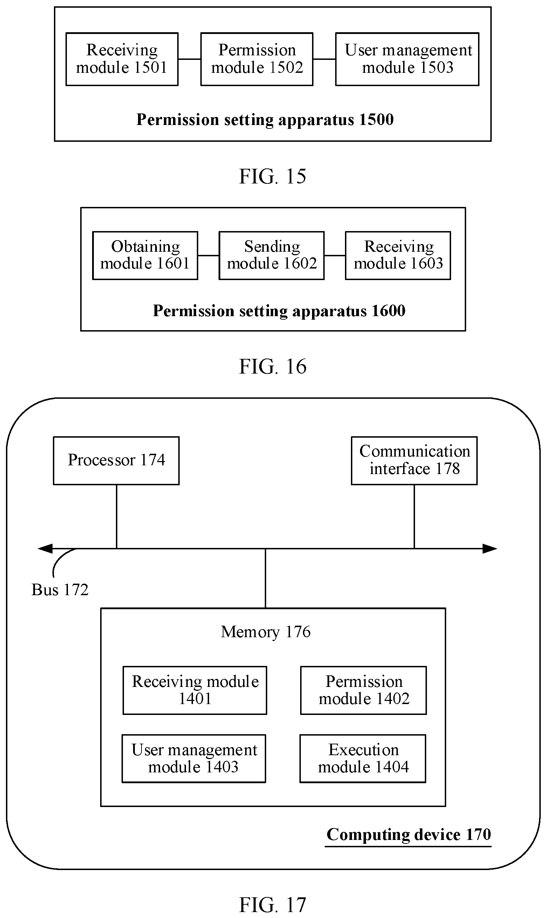

For example, FIG. 15 is a diagram of a possible structure of a permission setting apparatus (denoted as a permission setting apparatus 1500) in the foregoing embodiment. An action performed by the permission setting apparatus 1500 is implemented by a computing device (for example, an object storage service node) or implemented by a computing device executing corresponding software. The permission setting apparatus 1500 includes a receiving module 1501 and a permission module 1502. The receiving module 1501 is configured to receive a file permission setting request, where the file permission setting request includes a target identifier and a file ACL of the target identifier, and the file ACL of the target identifier includes at least one file user identifier and a file permission of the at least one file user identifier, for example, step 703 shown in FIG. 7. The permission module 1502 is configured to store the file ACL of the target identifier in the object storage service node based on the target identifier, where the file ACL of the target identifier is used to determine a file permission of a file user identifier associated with an operation request, for example, step 704 shown in FIG. 7.

Optionally, the permission setting apparatus 1500 further includes a user management module 1503. The user management module 1503 is configured to: receive a mapping configuration request, where the mapping configuration request includes a user mapping relationship, and the user mapping relationship includes a correspondence between the at least one file user identifier and at least one object user identifier; and store the user mapping relationship, where the user mapping relationship is used to determine a file user identifier corresponding to an object user identifier carried in the operation request, or the user mapping relationship is used to determine an object user identifier corresponding to a file user identifier carried in the operation request.

Optionally, the permission module 1502 is further configured to: receive a file permission update request, where the file permission update request includes the target identifier, an update file ACL, and a setting type of the update file ACL, and the setting type includes at least one of an add type, an override type, a modify type, and a delete type; and update the file ACL of the target identifier based on the target identifier, the update file ACL, and the setting type of the update file ACL.

Optionally, the file ACL includes one or more access control entries ACEs. The permission module 1502 is further configured to update the one or more ACEs of the file ACL. One ACE includes one file user identifier and a file permission of the file user identifier.

Optionally, the file permission setting request includes a setting type of the file ACL, and the setting type of the file ACL includes an add type.

Optionally, the permission module 1502 is specifically configured to receive the file permission setting request through an object ACL setting interface, where the object ACL setting interface is configured to set an object ACL of a target object.

Optionally, the object storage service node stores an access control policy of the target object. The access control policy of the target object includes the object ACL of the target object, and the object ACL of the target object includes the at least one object user identifier and an object permission of the at least one object user identifier. The permission module 1502 is specifically configured to write the file ACL of the target identifier into the access control policy of the target object based on the target identifier.

Optionally, the permission module 1502 is further configured to receive a file permission management request, where the file permission management request includes the target identifier, and the file permission management request is used to request to manage the file ACL of the target identifier; manage the file ACL of the target identifier based on the file permission management request and the target identifier; and return third response information based on the file permission management request, where the third response information indicates a management result of the file ACL.

Optionally, the file permission management request includes a file permission query request. The permission module 1502 is further configured to: receive the file permission query request, where the file permission query request includes the target identifier; and return the file ACL of the target identifier in response to the file permission query request.

Optionally, the file permission management request includes a file permission delete request. The permission module 1502 is further configured to: receive the file permission delete request, where the file permission delete request includes the target identifier; and delete the file ACL of the target identifier in response to the file permission delete request.

For detailed descriptions of the foregoing optional manners, refer to the foregoing method embodiments. Details are not described herein again. In addition, for descriptions of any explanation and beneficial effect of the permission setting apparatus 1500 provided above, refer to the foregoing corresponding method embodiment. Details are not described again.

It should be noted that the permission setting apparatus 1500 may be further configured to perform an action performed by the permission check apparatus 1400 in the foregoing embodiment. Details are not described herein. For details, refer to related descriptions of the following permission check apparatus 1400.

It should be noted that for related descriptions of the receiving module 1501, the permission module 1502, and the user management module 1503 shown in FIG. 15, refer to the related descriptions of the receiving module 1401, the permission module 1402, the user management module 1403, and the execution module 1404 shown in FIG. 14. Details are not described herein again.

For example, FIG. 16 is a diagram of a possible structure of a permission setting apparatus (denoted as a permission setting apparatus 1600) in the foregoing embodiment. An action performed by the permission setting apparatus 1600 is implemented by an electronic device or implemented by an electronic device executing corresponding software. The permission setting apparatus 1600 includes an obtaining module 1601 and a sending module 1602. The obtaining module 1601 is configured to obtain a file ACL of a target identifier, where the file ACL includes at least one file user identifier and a file permission of the at least one file user identifier, for example, step 701 shown in FIG. 7. The sending module 1602 is configured to send a file permission setting request to an object storage service node, where the file permission setting request includes the target identifier and the file ACL of the target identifier, for example, step 702 shown in FIG. 7.

Optionally, the obtaining module 1601 is specifically configured to: display a first UI, where the first UI includes a first control, and the first control indicates a target object/target node; display a second UI in response to a trigger operation for the first control, where the second UI includes a second control, and the second control indicates the file ACL; and obtain the file ACL of the target identifier based on the second control on the second UI.

Optionally, the obtaining module 1601 is further configured to: obtain a user mapping relationship, where the user mapping relationship includes a correspondence between the at least one file user identifier and at least one object user identifier; and send the user mapping relationship to the object storage service node.

Optionally, the obtaining module 1601 is specifically configured to: display a third UI, where the third UI includes a third control and a fourth control corresponding to the third control, the third control indicates the object user identifier, and the fourth control indicates the file user identifier; and obtain the user mapping relationship based on the third control and the fourth control corresponding to the third control.

Optionally, the sending module 1602 is specifically configured to send the file permission setting request to the object storage service node through an object ACL setting interface provided by the object storage service node, where the object ACL setting interface is an interface configured to set an object ACL of the target object.

Optionally, the file permission setting request includes a setting type of the file ACL, and the setting type of the file ACL includes an add type.

Optionally, the obtaining module 1601 is further configured to: obtain an update file ACL; and send a file permission update request to the object storage service node, where the file permission update setting request includes the target identifier, the update file ACL, and a setting type of the update file ACL; and the setting type of the update file ACL includes at least one of an add type, a delete type, an override type, and a modify type.

Optionally, the apparatus 1600 further includes a receiving module 1603. The sending module 1602 is further configured to send a file permission management request to the object storage service node, where the permission management request includes a target identifier, and the permission management request is used to request to manage the file ACL of the target identifier. The receiving module 1603 is configured to receive third response information, where the third response information indicates a management result of the file ACL.

Optionally, the file permission management request includes a file permission query request. The sending module 1602 is further configured to send the file permission query request to the object storage service node, where the file permission query request includes the target identifier. The receiving module 1603 is further configured to receive the file ACL of the target identifier sent by the object storage service node.

Optionally, the file permission management request includes a file permission delete request. The sending module 1602 is further configured to send the file permission delete request to the object storage service node, where the file permission delete request includes the target identifier. The receiving module 1603 is further configured to receive fourth response information sent by the object storage service node, where the fourth response information indicates a deletion result of the file ACL of the target identifier.

It should be noted that for related descriptions of the obtaining module 1601, the sending module 1602, and the receiving module 1603 shown in FIG. 16, refer to the related descriptions of the receiving module 1401, the permission module 1402, the user management module 1403, and the execution module 1404 shown in FIG. 14. Details are not described herein again.

For detailed descriptions of the foregoing optional manners, refer to the foregoing method embodiments. Details are not described herein again. In addition, for descriptions of any explanation and beneficial effect of the permission setting apparatus 1600 provided above, refer to the foregoing corresponding method embodiment. Details are not described again.

An embodiment of this application further provides a computing device. As shown in FIG. 17, the computing device 170 includes a bus 172, a processor 174, a memory 176, and a communication interface 178. The processor 174, the memory 176, and the communication interface 178 communicate with each other through the bus 172. The computing device 170 may be a server or a terminal device. It should be understood that quantities of processors and memories in the computing device 170 are not limited in this application.

The bus 172 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, the bus is represented by using only one line in FIG. 17, but it does not indicate that there is only one bus or one type of bus. The bus 172 may include a path for transmitting information between components (for example, the memory 176, the processor 174, and the communication interface 178) of the computing device 170.

The processor 174 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 176 may include a volatile memory (volatile memory), for example, a random access memory (random access memory, RAM). The processor 174 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 176 stores executable program code. The processor 174 executes the executable program code to separately implement functions of the receiving module 1401, the permission module 1402, the user management module 1403, and the execution module 1404, to implement a permission check method. That is, the memory 176 stores instructions for performing the permission check method.

Alternatively, the memory 176 stores executable program code. The processor 174 executes the executable program code to separately implement functions of the receiving module 1501, the permission module 1502, and the user management module 1503, to implement a permission setting method. That is, the memory 176 stores instructions for performing the permission setting method.

The communication interface 178 uses a transceiver module, for example, but not limited to, a network interface card or a transceiver, to implement communication between the computing device 170 and another device or a communication network.

It should be noted that the computing device 170 may be a computing device in an object storage service node (as shown in FIG. 1A).

An embodiment of this application further provides a computing device cluster. The computing device cluster includes at least one computing device. The computing device may be a server, for example, a cloud server, a central server, an edge server, or a local server in a local data center. In some embodiments, the computing device may alternatively be a terminal device like a desktop computer, a notebook computer, or a smartphone.

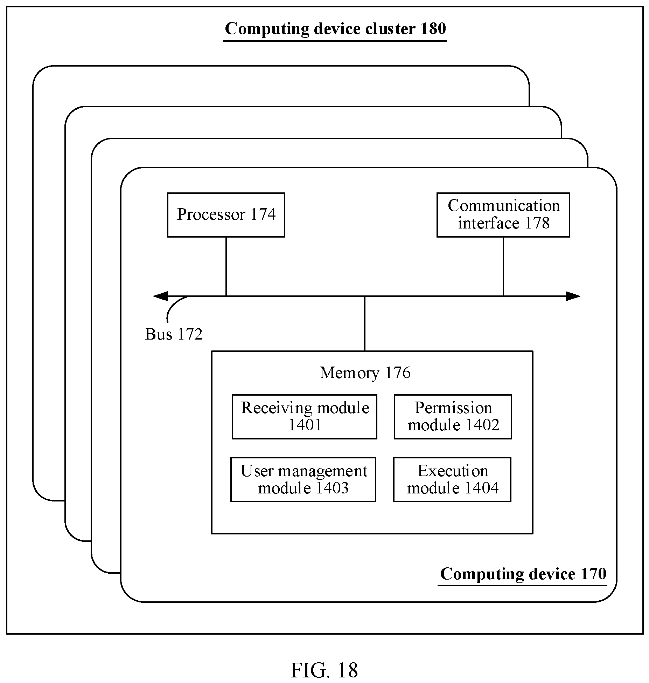

As shown in FIG. 18, the computing device cluster 180 includes at least one computing device 170.

Memories 176 in one or more computing devices 170 in the computing device cluster 180 may store same instructions for performing a permission check method. Alternatively, memories 176 in one or more computing devices 170 in the computing device cluster 180 may store same instructions for performing a permission setting method.

It should be noted that for related descriptions of the at least one computing device 170 in the computing device cluster shown in FIG. 18, refer to the related descriptions of the computing device shown in FIG. 17. Details are not described herein again.

It should be noted that, the computing device cluster 180 serve as an object storage service node (as shown in FIG. 1A or FIG. 1B), and is configured to provide a cloud service for a cloud service tenant.

A computing device cluster that executes the permission check apparatus 1400 is used as an example below to describe a connection manner of the computing device cluster.

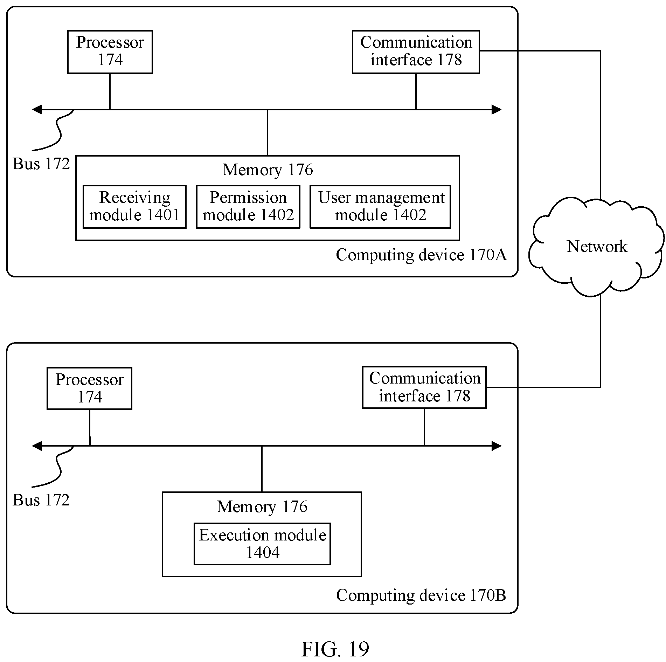

In a possible implementation, one or more computing devices in the computing device cluster (for example, the computing device cluster shown in FIG. 18) may be connected through a network. The network may be a wide area network, a local area network, or the like. FIG. 19 shows a possible implementation. As shown in FIG. 19, two computing devices (for example, a computing device 170A and a computing device 170B) are connected through a network, specifically, connected to the network through communication interfaces of the computing devices. In this possible implementation, a memory 106 in the computing device 170A stores instructions for executing functions of the receiving module 1401, the permission module 1402, and the user management module 1403. In addition, the memory 106 in the computing device 170B stores instructions for executing a function of the execution module 1404.

In the connection manner of computing device clusters shown in FIG. 19, it may be considered that a permission verification method provided by this application needs to occupy a large quantity of compute resources. Therefore, it is considered that the functions implemented by the receiving module 1401, the permission module 1402, and the user management module 1403 are performed by the computing device 170A.

It should be understood that functions of the computing device 170A shown in FIG. 19 may alternatively be performed by multiple computing devices 170. Similarly, functions of the computing device 170B may alternatively be performed by multiple computing devices 170.

An embodiment of this application further provides another computing device cluster. For a connection relationship between computing devices in the computing device cluster, refer to the connection manner of the computing device cluster in FIG. 19. A difference lies in that memories 106 in one or more computing devices 170 in the computing device cluster may store same instructions for performing a permission check method.

In some possible implementations, the memories 176 in the one or more computing devices 170 in the computing device cluster may alternatively separately store a part of the instructions for performing the permission check method. In other words, a combination of the one or more computing devices 100 may jointly execute the instructions for performing the permission check method.

It should be noted that, for related descriptions of a connection manner of a computing device cluster that executes the permission setting apparatus 1500, refer to the foregoing descriptions of the connection manner of the computing device cluster that executes the permission check apparatus 1400. Details are not described herein again.

An embodiment of this application further provides a gateway device. For related descriptions of the gateway device, refer to the foregoing descriptions of the computing device 170. Details are not described herein.

An embodiment of this application further provides a gateway device cluster. For related descriptions of the gateway device cluster, refer to the foregoing descriptions of the computing device cluster 170. Details are not described herein.

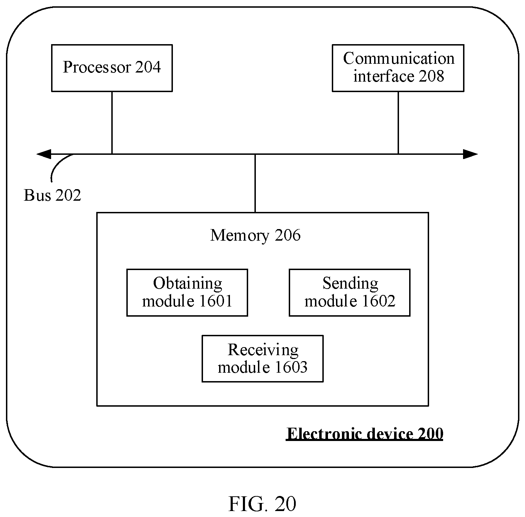

An embodiment of this application further provides an electronic device. As shown in FIG. 20, the electronic device 200 includes a bus 202, a processor 204, a memory 206, and a communication interface 208. The processor 204, the memory 206, and the communication interface 208 communicate with each other through the bus 202. The electronic device 200 may be a server or a terminal device. It should be understood that quantities of processors and memories in the electronic device 200 are not limited in this application.

The memory 206 stores executable program code. The processor 204 executes the executable program code to separately implement functions of the obtaining module 1601, the sending module 1602, and the receiving module 1603, to implement a permission setting method. That is, the memory 206 stores instructions for performing the permission setting method.

It should be noted that the electronic device 200 may be an electronic device used by a cloud service tenant shown in FIG. 1A or FIG. 1B.

It should be noted that for other related descriptions of the bus 202, the processor 204, the memory 206, and the communication interface 208 of the electronic device 200, refer to the related descriptions of the computing device shown in FIG. 17. Details are not described herein again.

An embodiment of this application further provides a computer program product including instructions. The computer program product may be software or a program product that includes the instructions and that can run on a computing device or be stored in any usable medium. When the computer program product runs on at least one computing device, the at least one computing device is caused to perform a permission check method.

An embodiment of this application further provides a computer program product including instructions. The computer program product may be software or a program product that includes the instructions and that can run on a computing device or be stored in any usable medium. When the computer program product runs on at least one computing device, the at least one computing device is caused to perform a permission setting method.

An embodiment of this application further provides a computer program product including instructions. The computer program product may be software or a program product that includes the instructions and that can run on an electronic device or be stored in any usable medium. When the computer program product runs on at least one electronic device, the at least one electronic device is caused to perform a permission setting method.

An embodiment of this application further provides a computer-readable storage medium. The computer-readable storage medium may be any usable medium that can be stored in a computing device, or a data storage device like a data center including one or more usable media. The computer-readable storage medium includes instructions, and the instructions instruct the computing device to perform a permission check method.

An embodiment of this application further provides a computer-readable storage medium. The computer-readable storage medium may be any usable medium that can be stored in a computing device, or a data storage device like a data center including one or more usable media. The computer-readable storage medium includes instructions, and the instructions instruct the computing device to perform a permission setting method.

An embodiment of this application further provides a computer-readable storage medium. The computer-readable storage medium may be any usable medium that can be stored in an electronic device, or a data storage device like a data center including one or more usable media. The computer-readable storage medium includes instructions, and the instructions instruct the electronic device to perform a permission setting method.

The usable medium may be a magnetic medium (for example, a floppy disk, a hard disk drive, or a magnetic tape), an optical medium (for example, a DVD), a semiconductor medium (for example, a solid-state drive), or the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A permission check method, wherein the method is applied to an object storage service node, a storage bucket of the object storage service node stores a target object, the object storage service node is configured to map the target object to a target node in a directory tree, the target node is a target file or a target directory, and both an identifier of the target node and an identifier of the target object are a target identifier; and the method comprises:
receiving, by the object storage service node, an operation request, wherein the operation request comprises the target identifier and a target operation type;
determining, by the object storage service node, an operation permission of the operation request based on a file access control list ACL of the target identifier and a file user identifier associated with the operation request, wherein the file ACL of the target identifier comprises at least one file user identifier and a file permission of the at least one file user identifier; and
determining, by the object storage service node, a permission check result based on the operation permission of the operation request and the target operation type, wherein the permission check result is that a check succeeds or fails.

2. The method according to claim 1, wherein determining, by the object storage service node, the operation permission of the operation request based on the file access control list ACL of the target identifier and the file user identifier associated with the operation request comprises:
determining, by the object storage service node based on the file ACL of the target identifier, a file permission of the file user identifier associated with the operation request; and
determining, by the object storage service node, the file permission of the file user identifier associated with the operation request as the operation permission of the operation request.

3. The method according to claim 1, wherein determining, by the object storage service node, the operation permission of the operation request based on the file access control list ACL of the target identifier and the file user identifier associated with the operation request comprises:
determining, by the object storage service node based on the file ACL of the target identifier, a file permission of the file user identifier associated with the operation request; and
determining, by the object storage service node based on an object ACL of the target identifier, an object permission of an object user identifier associated with the operation request, wherein the object ACL of the target identifier comprises at least one object user identifier and an object permission of the at least one object user identifier; and
determining, by the object storage service node, a minimum permission in the file permission of the file user identifier associated with the operation request and the object permission of the object user identifier associated with the operation request as the operation permission of the operation request.

4. The method according to claim 3, wherein the operation request comprises a target file user identifier, and an object user identifier corresponding to the target file user identifier is the object user identifier associated with the operation request; and determining, by the object storage service node based on the object ACL of the target identifier, the object permission of the object user identifier associated with the operation request comprises:
determining, by the object storage service node based on a user mapping relationship, the object user identifier corresponding to the target file user identifier as a target object user identifier, wherein the user mapping relationship comprises a correspondence between the target object user identifier and the target file user identifier; and
determining, by the object storage service node, an object permission of the target object user identifier based on the object ACL of the target identifier, wherein the object permission of the target object user identifier is the object permission of the object user identifier associated with the operation request.

5. The method according to claim 2 or 3, wherein the operation request comprises a target file user identifier, and the target file user identifier is the file user identifier associated with the operation request; and determining, by the object storage service node based on the file ACL of the target identifier, the file permission of the file user identifier associated with the operation request comprises:
determining, by the object storage service node, a file permission of the target file user identifier based on the file ACL of the target identifier, wherein the file permission of the target file user identifier is the file permission of the file user identifier associated with the operation request.

6. The method according to claim 2 or 3, wherein the operation request comprises a target object user identifier, and a file user identifier corresponding to the target object user identifier is the file user identifier associated with the operation request; and determining, by the object storage service node based on the file ACL of the target identifier, the file permission of the file user identifier associated with the operation request comprises:
determining, by the object storage service node based on a user mapping relationship, the file user identifier corresponding to the target object user identifier as a target file user identifier, wherein the user mapping relationship comprises a correspondence between the target file user identifier and the target object user identifier; and
determining, by the object storage service node, a file permission of the target file user identifier based on the file ACL of the target identifier, wherein the file permission of the target file user identifier is the file permission of the file user identifier associated with the operation request.

7. The method according to any one of claims 1 to 6, wherein before receiving, by the object storage service node, the operation request, the method further comprises:
receiving, by the object storage service node, a file permission setting request, wherein the file permission setting request comprises the target identifier and the file ACL of the target identifier; and
storing, by the object storage service node, the file ACL of the target identifier in the object storage service node based on the target identifier.

8. The method according to claim 7, wherein receiving, by the object storage service node, the file permission setting request comprises:
receiving, by the object storage service node, the file permission setting request through an object ACL setting interface, wherein the object ACL setting interface is configured to set an object ACL of the target object.

9. The method according to claim 7 or 8, wherein the method further comprises:
receiving, by the object storage service node, a file permission update request, wherein the file permission update request comprises the target identifier, an update file ACL, and a setting type of the update file ACL, and the setting type comprises at least one of an add type, an override type, a modify type, and a delete type; and
updating, by the object storage service node, the file ACL of the target identifier based on the target identifier, the update file ACL, and the setting type of the update file ACL.

10. The method according to any one of claims 7 to 9, wherein the method further comprises:
receiving, by the object storage service node, a file permission delete request, wherein the file permission delete request comprises the target identifier; and
deleting, by the object storage service node, the file ACL of the target identifier in response to the file permission delete request.

11. The method according to any one of claims 7 to 10, wherein the method further comprises:
receiving, by the object storage service node, a file permission query request, wherein the file permission query request comprises the target identifier; and
returning, by the object storage service node, the file ACL of the target identifier in response to the file permission query request.

12. The method according to any one of claims 1 to 11, wherein before receiving, by the object storage service node, the operation request, the method further comprises:
receiving, by the object storage service node, a mapping configuration request, wherein the mapping configuration request comprises the user mapping relationship, and the user mapping relationship comprises the correspondence between the target file user identifier and the target object user identifier; and
storing, by the object storage service node, the user mapping relationship.

13. The method according to any one of claims 1 to 12, wherein the method further comprises:
if the permission check result is that the check succeeds, processing, by the object storage service node, the operation request; or
if the permission check result is that the check fails, returning, by the object storage service node, the permission check result based on the operation request.

14. A permission check apparatus, wherein the apparatus comprises:
a receiving module, configured to receive an operation request, wherein the operation request comprises a target identifier and a target operation type; and
a permission module, configured to determine an operation permission of the operation request based on a file access control list ACL of the target identifier and a file user identifier associated with the operation request, wherein the file ACL of the target identifier comprises at least one file user identifier and a file permission of the at least one file user identifier, wherein
the permission module is further configured to determine a permission check result based on the operation permission of the operation request and the target operation type, wherein the permission check result is that a check succeeds or fails.

15. The apparatus according to claim 14, wherein the permission module is specifically configured to:
determine, based on the file ACL of the target identifier, a file permission of the file user identifier associated with the operation request; and
determine the file permission of the file user identifier associated with the operation request as the operation permission of the operation request.

16. The apparatus according to claim 14, wherein the permission module is specifically configured to:
determine, based on the file ACL of the target identifier, a file permission of the file user identifier associated with the operation request; and
determine, based on an object ACL of the target identifier, an object permission of an object user identifier associated with the operation request, wherein the object ACL of the target identifier comprises at least one object user identifier and an object permission of the at least one object user identifier; and
determine a minimum permission in the file permission of the file user identifier associated with the operation request and the object permission of the object user identifier associated with the operation request as the operation permission of the operation request.

17. The apparatus according to claim 16, wherein the operation request comprises a target file user identifier, and an object user identifier corresponding to the target file user identifier is the object user identifier associated with the operation request; and the permission module is specifically configured to:
determine, based on a user mapping relationship, the object user identifier corresponding to the target file user identifier as a target object user identifier, wherein the user mapping relationship comprises a correspondence between the target object user identifier and the target file user identifier; and
determine an object permission of the target object user identifier based on the object ACL of the target identifier, wherein the object permission of the target object user identifier is the object permission of the object user identifier associated with the operation request.

18. The apparatus according to claim 15 or 16, wherein the operation request comprises a target file user identifier, and the target file user identifier is the file user identifier associated with the operation request; and the permission module is specifically configured to:
determine a file permission of the target file user identifier based on the file ACL of the target identifier, wherein the file permission of the target file user identifier is the file permission of the file user identifier associated with the operation request.

19. The apparatus according to claim 15 or 16, wherein the operation request comprises a target object user identifier, and a file user identifier corresponding to the target object user identifier is the file user identifier associated with the operation request; and the permission module is specifically configured to:
determine, based on a user mapping relationship, the file user identifier corresponding to the target object user identifier as a target file user identifier, wherein the user mapping relationship comprises a correspondence between the target file user identifier and the target object user identifier; and
determine a file permission of the target file user identifier based on the file ACL of the target identifier, wherein the file permission of the target file user identifier is the file permission of the file user identifier associated with the operation request.

20. The apparatus according to any one of claims 14 to 19, wherein the permission module is further configured to:
receive a file permission setting request, wherein the file permission setting request comprises the target identifier and the file ACL of the target identifier; and
store the file ACL of the target identifier in the object storage service node based on the target identifier.

21. The apparatus according to claim 20, wherein the permission module is specifically configured to:
receive the file permission setting request through an object ACL setting interface, wherein the object ACL setting interface is configured to set an object ACL of the target object.

22. The apparatus according to claim 20 or 21, wherein the permission module is further configured to:
receive a file permission update request, wherein the file permission update request comprises the target identifier, an update file ACL, and a setting type of the update file ACL, and the setting type comprises at least one of an add type, an override type, a modify type, and a delete type; and
update the file ACL of the target identifier based on the target identifier, the update file ACL, and the setting type of the update file ACL.

23. The apparatus according to any one of claims 20 to 22, wherein the permission module is further configured to:
receive a file permission delete request, wherein the permission delete request comprises the target identifier; and
delete the file ACL of the target identifier in response to the file permission delete request.

24. The apparatus according to any one of claims 20 to 23, wherein the permission module is further configured to:
receive a file permission query request, wherein the permission query request comprises the target identifier; and
return the file ACL of the target identifier in response to the file permission query request.

25. The apparatus according to any one of claims 14 to 24, wherein the apparatus further comprises a user management module, and the user management module is configured to:
receive a mapping configuration request, wherein the mapping configuration request comprises the user mapping relationship, and the user mapping relationship comprises the correspondence between the target file user identifier and the target object user identifier; and
store the user mapping relationship.

26. The apparatus according to any one of claims 14 to 25, wherein the apparatus further comprises an execution module;
the execution module is configured to process the operation request if the permission check result is that the check succeeds; or
the permission module is further configured to: if the permission check result is the check fails, return the permission check result based on the operation request.

27. A computing device, wherein the computing device comprises a processor and a storage; and
the processor of the computing device is configured to execute instructions stored in the memory of the computing device, to cause the computing device to perform the method according to any one of claims 1 to 13.

28. A computing device cluster, comprising at least one computing device, wherein each of the at least one computing device comprises a processor and a memory; and
the processor of the at least one computing device is configured to execute instructions stored in the memory of the at least one computing device, to cause the computing device cluster to perform the method according to any one of claims 1 to 13.

29. A computer program product comprising instructions, wherein when the instructions are run by a computing device, the computing device node is caused to perform the method according to any one of claims 1 to 13.

30. A computer-readable storage medium, comprising computer program instructions, wherein when the computer program instructions are executed by a computing device, the computing device performs the method according to any one of claims 1 to 13.
